# EUROPEAN PATENT APPLICATION

(11) **EP 4 542 114 A1**
(43) Date of publication of application: **23.04.2025**
(21) Application number: 23822839.9
(22) Date of filing: 10.05.2023
(51) Int. Cl.: F23G 5/027, F23G 5/30, F23G 5/50, F23J 1/06, F23J 15/06

(54) **DOUBLE-MEDIUM TFB GASIFICATION INCINERATOR AND METHOD FOR IMPLEMENTING WASTE GASIFICATION AND INCINERATION**

(30) Priority: 15.06.2022 CN 202210681582
(71) Applicant: Tsinghua University, Beijing 100084 (CN); Beijing Aptblaze Technology Co., Ltd., Beijing 100085 (CN)
(72) Inventor: ZHANG, Yanguo, Beijing 100084 (CN); ZHOU, Hui, Beijing 100084 (CN); CONG, Kunlin, Beijing 100084 (CN); QI, Xiaoyu, Beijing 100085 (CN); ZHANG, Ning, Beijing 100085 (CN); CHEN, Xuan, Beijing 100085 (CN); LI, Qinghai, Beijing 100084 (CN)
(74) Representative: Kraus & Lederer PartGmbB
(86) International application number: PCT/CN2023/093123
(87) International publication number: WO 2023/241269

(57) **Abstract**

A dual-medium TFB gasification incinerator and implementation method of a waste gasification incineration. The incinerator includes an incinerator body, a gas-solid separator, a waste heat recovery device, and an incinerator body support. The incinerator body includes a gasification section, a combustion section, and a heat exchange section that are all sequentially connected from bottom to top. The combustion section and the heat exchange section are indirectly connected. The incinerator body support includes at least one layer of transverse beam, which is located at a level higher than a connection part of the combustion section and faces the incinerator body. Each of the at least one layer of transverse beam is provided with a layer of support plate on a side close to the incinerator body. Each layer of support plate supports a first-stage of heat exchange furnace wall and heat conduction oil coil pipes provided on an inner surface of the first-stage of heat exchange furnace wall. Flexible connection seals are provided between adjacent two stages of heat exchange furnace walls and between the heat exchange furnace wall and the furnace wall of the combustion section. The incinerator body portions of the gasification section and the combustion section are suspended from one layer of transverse beam adjacent to the connection part via the connection part.

## Description

### TECHNICAL FIELD

The present disclosure relates to the field of gasification combustion, and in particular, to a dual-medium TFB gasification incinerator and implementation method of a waste gasification incineration.

### BACKGROUND

The incineration is widely regarded as the most optimal approach for waste reduction, resource recycling, and waste detoxification. The existing waste incinerators mainly include fixed bed incinerators, fluidized bed incinerators, rotary kiln incinerators, and pyrolysis incinerators. The primary technical means to treat waste materials in a fluidized bed incinerator is that: under the force of primary air, the inert bed material and waste materials are blown up and suspended to form a fluidized bed layer, and the inert bed material in the fluidized bed is used as the heat carrier to incinerate the waste materials imported into the furnace. Turbulent fluidized bed (TFB) is one of the effective means for gasification and incineration of waste materials, and has many advantages, such as wide fuel adaptability, low initial emissions, and simple process flow. However, the existing turbulent fluidized bed gasification incinerator still has potential for improvement and optimization. Most of the existing TFB use a single heat transfer medium, such as water or heat conduction oil. In practical application scenarios, there are instances where simultaneous utilization of two heat transfer media is required, such as incinerating county garbage while simultaneously providing steam outwards and employing heat conduction oil for the production of high-quality organic fertilizer. The high-temperature flue gas produced in the gasification and combustion process of waste materials in the gasification incinerator carries a large amount of heat and a certain amount of ash. How to fully utilize waste heat is an important issue in resource recycling treatment of waste materials. The simultaneous use of two heat transfer media is not a simple problem akin to a simple addition calculation, but may bring a lot of new problems, such as that their flow and heat transfer characteristics are very different and between their requirements for structure still exist discrepancies. In addition, thermal expansion and sealing are common problems of existing incinerators, and if not properly addressed, the structure of the incinerator may be unstable, and may incur greater safety risks. Furthermore, using two structures may bring more new structural problems of expansion and sealing.

### SUMMARY

The present disclosure aims to solve at least to some extent one of the technical problems in the related field. Therefore, one of the objectives of the present disclosure is to propose a dual-medium TFB gasification incinerator and an implement method of waste gasification incineration. The dual-medium TFB gasification incinerator can simultaneously provide steam and heat conduction oil to meet different requirements, has high efficiency of flue gas heat exchange and high efficiency of waste heat utilization, and achieves maximum thermal efficiency by setting according to energy grade water walls, heat conduction oil coils, heat conduction oil convection pipe rows, water-medium economizer pipe rows, and an air preheater to fully absorb heat. Furthermore, the dual-medium TFB gasification incinerator can also effectively address the thermal expansion sealing issue between a lower incinerator body formed by water wall evaporation heating surface and an upper incinerator body formed by the heat conduction oil coils, and has advantages such as wide fuel adaptability, high efficiency, low emission, stable system, and high safety.

In one aspect of the present disclosure, a dual-medium TFB gasification incinerator is proposed. According to an embodiment of the present disclosure, the dual-medium TFB gasification incinerator includes an incinerator body, a gas-solid separator, a waste heat recovery device, and an incinerator body support, where the incinerator body, the gas-solid separator, and the waste heat recovery device are all sequentially interconnected.

The incinerator body includes a gasification section, a combustion section, and a heat exchange section, all sequentially connected from bottom to top. The bottom of the gasification section is provided with a first air distribution device and a slag discharge outlet. The gasification section includes an upper variable cross-section segment, an equal cross-section segment, and a lower variable cross-section segment, which are arranged from upper, middle to lower level. The cross-sectional area of the upper variable cross-section segment gradually increases from top to bottom, and the cross-sectional area of the lower variable cross-section segment decreases from top to bottom. The cross-sectional area of the upper variable cross-section segment is not less than that of the combustion section, and the combustion section is provided with secondary air distribution devices on the sides of it.

Furnace walls of the gasification section and the combustion section are of water walls. The furnace wall of the heat exchange section connects indirectly with the furnace wall of the combustion section, and an outer surface of the furnace wall of the combustion section has a connection part. The heat exchange section includes at least one stage of heat exchange furnace wall, with two adjacent stages of heat exchange furnace walls arranged vertically and connecting with each other indirectly. The inner surface of each stage of the heat exchange furnace wall is provided with a set of heat conduction oil coil pipes. A flow direction of heat conduction oil in each set of coil pipes is bottom-in and top-out. At the top of the heat exchange section is set a hot flue gas outlet, and the hot flue gas outlet connects with the waste heat recovery device via the gas-solid separator.

The waste heat recovery device includes a heat conduction oil pipe row, an economizer, and an air preheater, all arranged sequentially from top to bottom, and a hot air outlet of the air preheater connects to at least one of air inlets of gasification section and a combustion section.

The incinerator body support includes a steel frame body and at least one layer of support plate, both interconnected with each other. The support plate locates higher than the connection part and orients to the incinerator body. Each layer of support plates supports each stage of the heat exchange furnace walls and the heat conduction oil coil pipes arranged at the inner surface of the heat exchange furnace wall of this stage. A flexible connection seal is provided between the two adjacent stages of heat exchange furnace walls and between the heat exchange furnace wall and the furnace wall of the combustion section. The furnace bodies of the gasification section and of the combustion section connect to the steel frame body via the connection part, by suspension arrangement.

According to the dual-medium TFB gasification incinerator of the above embodiments of the present disclosure, sufficient absorption of heat can be achieved and the maximum thermal efficiency can be realized by combining the heat conduction oil and water as main cooling media, and providing, based on energy grade, water walls, heat conduction oil coil pipes, heat conduction oil convection pipe rows, economizer pipe rows within which water is heat transfer medium, and an air preheater. On the one hand, the heat exchange efficiency is much higher than those of other kind of incinerators with single heat transfer medium, and the process heat in the form of hot oil and steam can be obtained, which is convenient for heat consumption in production operations in industries of chemistry food, and organic fertilizer, etc. On the other hand, the gasification agent in the gasification section and/or the combustion-supporting air in the combustion section can be preheated to improve the efficiency of gasification and combustion and to reduce the production cost. In addition, the incinerator body is suspended by incinerator body support to form 'lower suspension and upper support' structure of the main furnace, so that the incinerator body (with gravity) can be expanded downwards with the joints of the incinerator body support and the incinerator body as the fixed ends, and the sealing of the incinerator body will not be affected during the expansion process. Therefore, the thermal expansion sealing issue can be effectively addressed between the lower incinerator body formed by evaporation heating surface of the water walls and the upper incinerator body formed by the heat conduction oil coil pipes, and the structural instability and safety issues of the incinerator body caused by the poor sealing due to thermal expansion can be prevented.

According to another aspect of the present disclosure, it proposed an implementation method of waste gasification incineration based on the utilization of the above dual-medium TFB gasification incinerator. According to an embodiment of the present disclosure, this method includes: 1) supplying waste materials to the gasification section of a lower part of the incinerator body for gasification to obtain gasified gas and solid residues, which are discharged out of the incinerator intermittently; 2) importing the gasified gas into the combustion section in the middle of the incinerator body for combustion to obtain a combusted high-temperature flue gas; 3) cooling the combusted high-temperature flue gas by heat conduction oil coil pipes to obtain a medium-temperature flue gas; 4) performing gas-solid separation on the medium-temperature flue gas by the gas-solid separator to obtain a primary purified flue gas; and 5) introducing the primary purified flue gas into the waste heat recovery device, and discharging purified flue gas after heat exchange sequentially through the heat conduction oil pipe row, the economizer, and the air preheater.

According to the implementation method of waste gasification incineration, illustrated in the above embodiment of the present disclosure, during waste incineration, full resource utilization of high-temperature flue gas heat can be achieved step by step according to the flue gas flow path, resulting the improved heat exchange efficiency. In addition, the thermal expansion sealing issue of the incinerator body can be effectively addressed through the above method, preventing problems of structural instability, poor sealing property of the incinerator body, and potential safety risks caused by thermal expansion. Thus, the method is simple in process, and easy in operation, and achieves high energy grade, which not only realizes the full resource recovery and detoxification treatment of waste materials but also ensure the stability and safety of the incinerator structure.

Additional aspects and advantages of the present disclosure will be set forth partially in the following description, will be partially apparent from the description, or may be learned by practices from the present disclosure.

### BRIEF DESCRIPTION OF DRAWINGS

The above and/or additional aspects and advantages of the present disclosure will become apparent and be readily understood from the following description of embodiments and with reference to the accompanying drawings.
FIG. 1 is a schematic structural diagram of a dual-medium TFB gasification incinerator according to an embodiment of the present disclosure.
FIG. 2 is a schematic structural diagram of a dual-medium TFB gasification incinerator according to another embodiment of the present disclosure.
FIG. 3 is a schematic structural diagram of a dual-medium TFB gasification incinerator according to another embodiment of the present disclosure.
FIG. 4 is a schematic structural diagram of a dual-medium TFB gasification incinerator according to another embodiment of the present disclosure.
FIG. 5 is a schematic structural diagram of an incinerator body of a dual-medium TFB gasification incinerator according to an embodiment of the present disclosure.
FIG. 6 is a schematic structural diagram of air distribution and deslagging system according to an embodiment of the present disclosure.
FIG. 7 is a schematic diagram of deslagging valves according to an embodiment of the present disclosure.
FIG. 8 is a sectional drawing of ash discharging device according to an embodiment of the present disclosure.
FIG. 9 is a schematic structural diagram of anti-wear plate provided at heat exchange pipes of waste heat recovery device according to an embodiment of the present disclosure.
FIG. 10 is a schematic structural cross-section diagram of an anti-wear plate according to an embodiment of the present disclosure.
FIG. 11 is a schematic structural cross-section diagram of an anti-wear plate according to another embodiment of the present disclosure.
FIG. 12 is a side view of a single heat exchange pipe and an anti-wear plate according to an embodiment of the present disclosure.
FIG. 13 is a top view of a single heat exchange pipe and an anti-wear plate according to an embodiment of the present disclosure.
FIG. 14 is a schematic structural diagram illustrating the relative position between a slope of anti-wear plate and heat exchange pipe according to an embodiment of the present disclosure.
FIG. 15 is a schematic diagram illustrating dimensions of anti-wear plate and windward flat area of heat exchange pipes according to an embodiment of the present disclosure.
FIG. 16 is a schematic structural diagram illustrating a structure that heat conduction oil pipe rows or economizer pipe rows are arranged in parallel in waste heat recovery device according to an embodiment of the present disclosure.
FIG. 17 is a schematic structural diagram showing a structure in which heat conduction oil pipe rows or economizer pipe rows are arranged in a staggered parallel manner in a waste heat recovery device according to an embodiment of the present disclosure.

### Reference numerals:

100 incinerator body; 110 gasification section; 120 combustion section; 130 heat exchange section; 140 flexible connection seal; 150 steam drum; 111 upper variable cross-section segment; 112 equal cross-section segment; 113 lower variable cross-section segment; 114 first air distribution device; 115 slag discharge outlet; 116 gas inlet at a bottom of the gasification section; 117 gas inlet at a side wall of the gasification section; 121 air inlet of combustion section; 122 connection part; 131 heat conduction oil coil pipe; 132 hot flue gas outlet; 133 heat exchange furnace wall; 200 gas-solid separator; 210 second ash discharge outlet; 300 waste heat recovery device; 310 heat conduction oil pipe row; 311 heat conduction oil heat-exchange pipe; 320 economizer; 321 heat-conducting water heat-exchange pipe; 330 air preheater; 331 first air preheater; 332 second air preheater; 333 partition board; 340 first ash discharge outlet; 350 flue gas exhaust port; 400 incinerator body support; 410 steel frame body; 420 first transverse beam; 430 support plate; 440 second transverse beam; H total height of the incinerator body; L1 length of the combustion section; L2 length of the gasification section; and
1141 primary air distributor; 1142 primary air chamber; 1143 secondary air distributor; 161 deslagging air chamber; 162 deslagging channel; 1631 first deslagging valve; 1632 second deslagging valve; 164 fluidizing gas flow channel; 165 fluidizing gas circulation inlet; 166 bulk waste outlet; 1633 first rack; 1634 first speed reducer; 1635 first motor; 1636 second rack; 1637 second speed reducer; 1638 second motor; 500 ash discharging device; 510 ash hopper; 520 spiral scraper; 550 gear; 540 coupler; 530 motor; 560 temperature measurer; 570 limit protrusion; 600 anti-wear plate; 610 support; 611 first connection hole; 620 connection rod; 621 second connection hole.

### DESCRIPTION OF EMBODIMENTS

Reference will now be made in detail to the embodiments of the present disclosure, examples of which are illustrated in the accompanying drawings. The same or similar reference numerals refer to the same or similar elements, or refer to the elements having the same or similar functions throughout the drawings. The embodiments described below with reference to the accompanying drawings are exemplary, and are intended to be illustrative of the present disclosure and are not to be construed as limiting the present disclosure.

In the description of the present disclosure, it is to be understood that the terms "center," "length," "upper," "lower," "left," "right," "upright," "horizontal," "top," "bottom," "inner," "outer," "circumferential," and the like indicate orientations or positional relationships based on the orientations or positional relationships shown in the figures, are merely for convenience in describing and simplifying the present disclosure, and do not indicate or imply that the referenced devices or elements must have a particular orientation, be constructed and operated in a particular orientation, and thus should not be construed as limiting the present disclosure. Further, the terms "first" and "second" are used for descriptive purposes only, and are not to be construed as indicating or implying relative importance or implicitly indicating the number of indicated technical features. Thus, the features defined by "first" and "second" may explicitly or implicitly include at least one of the features. In the description herein, "a plurality of" means at least two, e.g., two, three, etc., unless is specifically and specially limited otherwise. In the present disclosure, unless expressly stated or limited otherwise, the terms "mounted," "connected to," "connected," "fixed," and the like are to be interpreted broadly, e.g., either fixedly or detachably connected, or integrally formed, in the forms of a mechanical connection or an electrical connection, directly connection or indirectly connection through an intermediate medium, interconnection between two elements or an interactive relationship between two elements, unless those terms are explicitly defined otherwise. For ordinary technical personnel in this field, the specific meaning of the above terms in the present disclosure may be understood based on specific situations. In the present disclosure, unless expressly stated or limited otherwise, a first feature "above" or "below" a second feature may mean that the first and second features are in direct contact, or that the first and second features are in indirect contact through an intermediate medium. Further, the first feature "on," "above," and "over" the second feature means that the first feature may be directly above or obliquely above the second feature, or merely indicates that the first feature is at a higher level than the second feature. The first feature "under," "below," and "beneath" the second feature means that the first feature is directly below or obliquely below the second feature, or simply indicates that the first feature is at a lower level than the second feature.

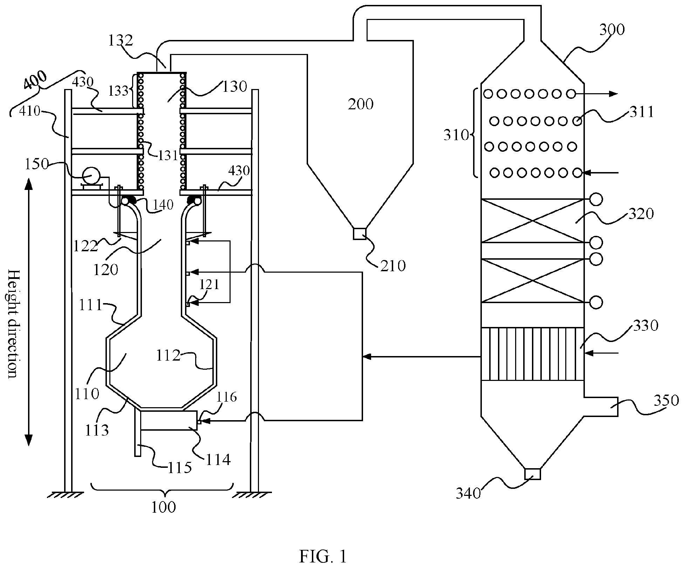

In an aspect of the present disclosure, a dual-medium TFB gasification incinerator is provided. According to an embodiment of the present disclosure, with reference to FIG. 1, the dual-medium TFB gasification incinerator includes an incinerator body 100, a gas-solid separator 200, a waste heat recovery device 300, and an incinerator body support 400, where the incinerator body 100, the gas-solid separator 200, and the waste heat recovery device 300 are all sequentially interconnected.

The incinerator body 100 includes a gasification section 110, a combustion section 120, and a heat exchange section 130 that are all sequentially connected from bottom to top. The gasification section 110 is provided with a first air distribution device 114 and has a slag discharge outlet 115 at a bottom thereof. The gasification section 110 includes an upper variable cross-section segment 111, an equal cross-section segment 112, and a lower variable cross-section segment 113 arranged from upper, middle to lower level. A cross-sectional area (perpendicular to a height direction of the incinerator body) of the upper variable cross-section segment 111 gradually increases from top to bottom, and a cross-sectional area (perpendicular to the height direction of the incinerator body) of the lower variable cross-section segment 113 gradually decreases from top to bottom. The cross-sectional area of the upper variable cross-section segment 111 is not smaller than cross-sectional areas of the combustion section 120 and the heat exchange section 130, in which the combustion section 120 and the heat exchange section 130 as a whole may independently have equal cross-sections, respectively. The combustion section 120 is provided with secondary air distribution devices on sides thereof.

A furnace wall of the gasification section 110 and a furnace wall of the combustion section 120 are both water walls. The furnace wall of the heat exchange section 130 connects indirectly to the furnace wall of the combustion section 120, and an outer surface of the furnace wall of the combustion section 120 is provided with a connection part 122. The heat exchange section 130 includes at least one stage of heat exchange furnace wall 133, and two adjacent stages of heat exchange furnace walls 133 are arranged up and down and are indirectly connected. An inner surface of each stage of heat exchange furnace wall 133 is provided with a set of heat conduction oil coil pipes 131. A flow direction of a heat conduction oil in each set of heat conduction oil coil pipes 131 is bottom-in and top-out. That is, a cold oil inlet of each set of heat conduction oil coil pipes is located at a lower part of this stage of heat exchange furnace wall 133 and a hot oil outlet is located at an upper part of the heat exchange furnace wall 133, in which the lower inlet and the upper outlet of the heat conduction oil can ensure that a small amount of steam or non-condensable gas will not adhere to an inner surface of a pipe wall of the heat conduction oil coil pipe after the heat conduction oil is heated. At the top of the heat exchange section 130 seats a hot flue gas outlet 132, and the hot flue gas outlet 132 connects the waste heat recovery device 300 via a gas-solid separator 200. The waste heat recovery device 300 includes a heat conduction oil pipe row 310, an economizer 320, and an air preheater 330 that are all arranged sequentially from top to bottom, and a hot air outlet of the air preheater 330 is connected to at least one of an air inlet of the gasification section 110 and an air inlet of the combustion section 120.

The incinerator body support 400 includes a steel frame body 410 and at least one layer of support plates 430. The support plates 430 connect to the steel frame body 410, and lay at a higher level than the connection part 122 and face towards the incinerator body 100. Each layer of support plates 430 support one stage of heat exchange furnace wall 133 and heat conduction oil coil pipes 131 disposed at the inner surface of the one stage of heat exchange furnace wall 133. A flexible connection seal 140 is provided between adjacent two stages of heat exchange furnace walls 133 and between the heat exchange furnace wall 133 and the furnace wall of the combustion section 120. An incinerator body portion of the gasification section 130 and an incinerator body portion of the combustion section 120 are connected to the steel frame body 410 by the connection part 122 by suspension arrangement. The steel frame body 410 is connected to the ground or other fixed surfaces to achieve the effects of integral fixing, supporting, and suspending. The support plate 430 may be arranged along a circumferential direction of the incinerator body. The adjacent two stages of heat exchange furnace walls 133 may be welded or otherwise fixedly connected to the support plate 430, respectively. A flexible connection (not shown) seal is preferably provided between the adjacent two stages of heat exchange furnace walls 133 and the support plate 430 respectively. Accordingly, a lower part of the heat exchange furnace wall 133 connected to the furnace wall of the combustion section 120 may be welded or otherwise fixedly connected to the support plate 430, and a flexible connection (not shown) seal is preferably respectively provided between the furnace wall of the combustion section 120 and the support plate 430 and between the lower part of the heat exchange furnace wall 133 connected to the furnace wall of the combustion section 120 and the support plate 430. Further, the flexible connection seal may be a metal flexible connection seal, for example, a copper busbar flexible connection may be used to achieve a seal.

The dual-medium TFB gasification incinerator can provide steam and a heat conduction oil simultaneously to meet different requirements, has high efficiency of flue gas heat exchange and high efficiency of waste heat utilization, and achieves maximum thermal efficiency by setting according to energy grade the water walls, the heat conduction oil coil pipes, the heat conduction oil convection pipe rows, water-medium economizer pipe row, and the air preheater to fully absorb heat. Furthermore, the dual-medium TFB gasification incinerator can also effectively address the thermal expansion sealing issue between a lower incinerator body formed by a water wall evaporation heating surface and an upper incinerator body formed by the heat conduction oil coil pipes, and has advantages such as wide fuel adaptability, high efficiency, low emission, stable system, and high safety. It should be noted that the term "dual-medium" in the dual-medium TFB gasification incinerator of the present disclosure refers to the heat exchange media in the incinerator body, i.e., water and a heat conduction oil.

The incinerator body 100, the gas-solid separator 200, and the waste heat recovery device 300 of the dual-medium TFB gasification incinerator will be described in detail with reference to FIGS. 1 to 15.

### Incinerator Body 100

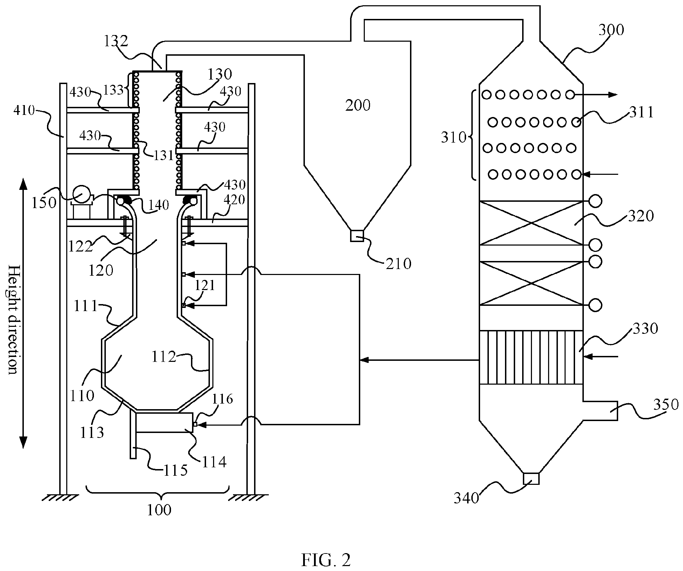

According to an embodiment of the present disclosure and with reference to FIG. 1, in order to facilitate the suspension arrangement of the incinerator body portion of the gasification section 110 and the incinerator body portion of the combustion section 120, the incinerator body portion of the gasification section 110 and the incinerator body portion of the combustion section 120 may be both suspended from a layer of support plate 430 located between the heat exchange furnace wall 133 and the furnace wall of the combustion section 120 by the connection part 122. In another exemplary embodiment of the present disclosure, as understood with reference to FIG. 2, the incinerator body support 400 may be further provided with a first transverse beam 420 such that the first transverse beam 420 is disposed at a part of the steel frame body 400 at a higher level than the connection part 122 and faces the incinerator body 100. Accordingly, the incinerator body portion of the gasification section 110 and the incinerator body portion of the combustion section 120 are suspended from the first transverse beam 420 via the connection part 122. In this case, a layer of support plate 430 located between the heat exchange furnace wall 133 and the furnace wall of the combustion section 120 may be disposed on a side of the first transverse beam 420 close to the incinerator body 100. It will be appreciated that the support plate 430 may be integrally formed with the first transverse beam 420 or may be detachably connected to the first transverse beam 420 by screwing, snapping, or the like, to connect the support plate with the steel frame body, thereby facilitating the simplification of the structure of the incinerator body and facilitating the assembly, disassembly, and maintenance of the incinerator body. In addition, it is also understood that the first transverse beam 420 may be disposed in the circumferential direction of the incinerator body 100.

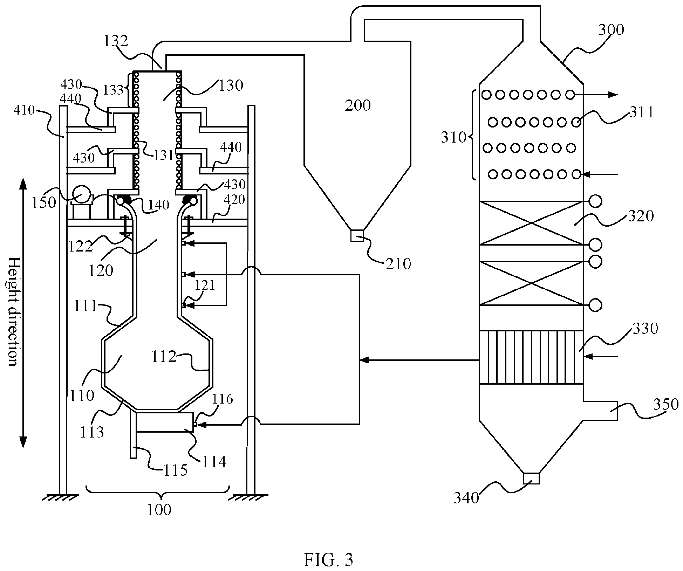

According to an embodiment of the present disclosure and with reference to FIG. 3, it may be understood that the incinerator body support 400 may further include at least one layer of second transverse beam 440. The second transverse beam 440 may be disposed at a part of the steel frame body 400 at a higher level than the first transverse beam 420 and face the incinerator body 100. The number of layers of the second transverse beams 440 may be equal to the number of layers of the support plates 430 located between the heat exchange furnace walls 133, and each layer of the support plate 430 located between adjacent two stages of heat exchange furnace walls 133 is disposed on a side of a layer of second transverse beam 440 close to the incinerator body 100. It is to be understood that the support plate 430 may be integrally formed with the second transverse beam 440 or may be detachably connected to the second transverse beam 440 by screwing, snapping, or the like, to connect the support plate with the steel frame body, thereby facilitating assembly, disassembly, and maintenance of the incinerator body. In addition, it is also understood that the second transverse beam 440 may be arranged in the circumferential direction of the incinerator body 100.

According to an embodiment of the present disclosure, the furnace wall of the gasification section 110 and the furnace wall of the combustion section 120 may be both water walls, and preferably may be integrally formed membrane-type water walls. The suspended water walls can absorb the amount of thermal expansion and ensure that the hearth has a good tightness, reduce an air leakage coefficient of the hearth, facilitate the realization of a strict seal, and improve the gasification and combustion conditions in the incinerator. Furthermore, the water walls also facilitate to coat a refractory layer on an inner surface of the hearth. Further, a steam drum 150 may be connected to an upper part of the water walls. The steam drum 150 has an inlet connected to an upper header of the water walls and an outlet connected to a lower header of the water walls. In this way, steam-water separation of steam obtained by heat exchange of the water wall can be achieved by the steam drum, and the separated water can be recycled as cooling water of the water wall. In addition, a steam drum support may be provided at a layer of the support plate 430 between the heat exchange furnace wall 133 and the furnace wall of the combustion section 120 (as shown in FIG. 1), or a steam drum support may be provided at the first transverse beam 420 (as shown in FIG. 2), thereby effectively fixing the steam drum 150 by the steam drum support.

According to an embodiment of the present disclosure, the first air distribution device 114 disposed at the bottom of the gasification section 110 may include a plurality of directional hoods, which can achieve the supply and uniform distribution of a gasifying agent. In addition, it will be appreciated that after the waste enters the gasification section, a primary air may be supplied as a gasifying agent to the gasification section by the first air distribution device, to gasify the waste and cause a material including the waste and an inert bed material to flow in a gas-solid turbulent fluidization mode. The type of the gasifying agent is not particularly limited, and those skilled in the art can flexibly select based on actual needs. For example, the gasifying agent may include at least one selected from a group consisting of air, oxygen, and water vapor.

According to the embodiment of the present disclosure, the gasification section 110 includes the upper variable cross-section segment 111, the equal cross-section segment 112, and the lower variable cross-section segment 113 arranged from upper, middle to lower level. The cross-sectional area of the upper variable cross-section segment 111 gradually increases from top to bottom, and the cross-sectional area of the lower variable cross-section segment 113 gradually decreases from top to bottom. The variable cross-section design of the gasification section can realize the superposition of multiple beds, form turbulent fluidized state dominated by internal circulation, strengthen mass transfer and heat exchange, avoid the accumulation of bottom materials, meet the requirement of centralized treatment of multiple wastes in the same incinerator, and be more conducive to the thorough gasification of wastes. It may be understood that the dual-medium TFB gasification incinerator in the present disclosure is suitable for treating a plurality of organic solid wastes that are difficult to treat, and the type of suitable organic solid wastes thereof is not particularly limited. Those skilled in the art can make a flexible selection based on actual situations. For example, the wastes to be addressed include waste plastics, waste tires, waste rubber, biological waste, sludge, paper-making waste, medical waste, and the like. Various forms and various types of wastes, such as solid, liquid, and waste in a pseudo-fluid state, can be processed in the same incinerator, and may be added in different levels based on the characteristics of the wastes (such as moisture, particle size, or phase state).

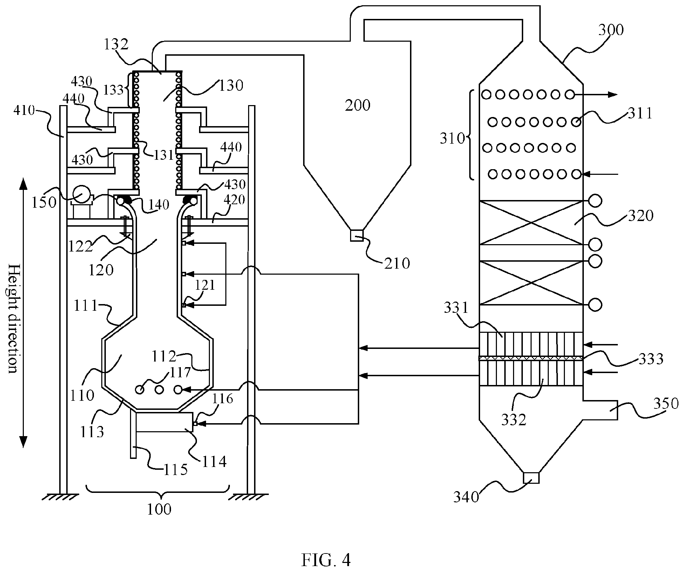

According to an embodiment of the present disclosure, it may be understood with reference to FIG. 4 that the gasification section 110 may be further provided with a tertiary air distribution device on a side thereof. The tertiary air distribution device may have a gasifying agent inlet 117 formed at a side wall of the gasification section. The tertiary air distribution device may have a plurality of gasifying agent inlets 117 arranged in a circumferential direction of the gasification section 110 or multiple layers of gasifying agent inlets 117 arranged in a height direction of the gasification section 110. Thus, in addition to supplying the gasifying agent to the gasification section through the air inlet 116 at the bottom of the gasification section, it is also possible to supply the primary air as the gasifying agent through the gasifying agent inlet 117, thereby achieving multi-stage air distribution in the gasification section and sufficient gasification of the waste.

According to an embodiment of the present disclosure, it may be understood with reference to FIG. 1 or FIG. 4 that the secondary air distribution devices disposed at the side of the combustion section 120 may have an upper layer of air inlet 121, a middle layer of air inlet 121, and a lower layer of air inlet 121 that are arranged in the height direction of the incinerator body 100. Each layer of the air inlet 121 of the combustion section may include one air inlet of the combustion section 121 or a plurality of air inlets of the combustion section 121 uniformly arranged in a circumferential direction of the side wall of the combustion section. Accordingly, the air inlet of the combustion section 121 is configured to supply a secondary air as a combustion gas into the combustion section, to realize multi-stage air distribution and accurate temperature control of the combustion section, and ensure that the material has sufficient residence time and an expected combustion temperature in the combustion section to achieve sufficient combustion of the waste.

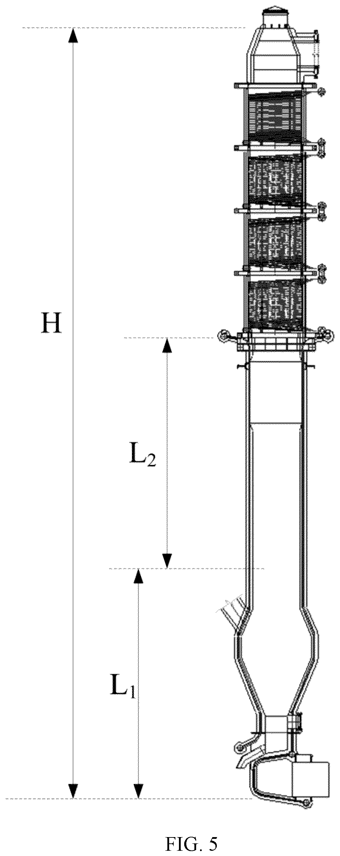

According to an embodiment of the present disclosure, with reference to FIG. 5, a length L₁ of the combustion section 120 may be between 1/4 and 1/3 of a total height H of the incinerator body 100. A length L₂ of the gasification section 110 may be in a range of 1/6 to 1/3 of the total height H of the incinerator body 100, for example, may be 1/4 of the total height H. When an organic solid waste is being addressed, a gasification temperature of the organic solid waste in the gasification section is usually required to be maintained at 650-850°C in order to effectively inhibit initial generation of NOₓ and dioxin. For example, a temperature of a common organic solid waste in the gasification section is usually required to be maintained at 650-800°C, and a temperature of an organic hazardous waste in the gasification section is usually required to be maintained at 650-850°C. In order to completely decompose harmful substances such as dioxin, the residence time of materials in the combustion section is usually required to be not shorter than 2 s, the temperature of the common organic solid waste is usually required to be maintained to be not lower than 850°C, and the temperature of the organic hazardous waste is usually required to be maintained to be not lower than 1100°C. In addition, a temperature of a high-temperature flue gas generated from the organic solid waste after passing through the heat exchange section is expected to be controlled at 500-600°C, to prevent ash with a high alkali metal content in the flue gas from attaching to plates or being bonded on the inner wall of the separator. In the present disclosure, controlling a sectional ratio of the incinerator body in the above range facilitates to meet the overall requirements of each of gasification, combustion, and heat exchange, to achieve full resource recovery and detoxification treatment of the waste materials.

According to an embodiment of the present disclosure, a connection height between the adjacent two stages of heat exchange furnace walls 133 may be in a range of 300 mm to 500 mm, for example, may be 350 mm, 400 mm, or 450 mm. A connection height between the heat exchange furnace walls 133 and the furnace wall of the combustion section may be in a range of 300 mm to 500 mm, for example, may be 350 mm, 400 mm, or 450 mm. It may be understood that the connection part between the adjacent two stages of heat exchange furnace walls 133 and the connection part between the heat exchange furnace walls 133 and the furnace wall of the combustion section are both provided with an expansion sealing structure, such as a flexible connection seal. Thus, it is not only convenient to realize the connection operations, such as welding, between the furnace walls of the heat exchange section and between the furnace walls of the heat exchange section and the furnace wall of the combustion section, but also beneficial to realize the flexible connection sealing, and further beneficial to solve the heat expansion sealing problem between a lower incinerator body formed by an evaporation heating surface of the water wall and an upper incinerator body formed by the heat conduction oil coil pipes.

According to an embodiment of the present disclosure, the inner surface of the furnace wall of the gasification section 110 may be provided with a refractory layer. Further, a part of the inner surface or the entire inner surface of the furnace wall of the combustion section 120 may be coated with a refractory layer, thereby both avoiding direct contact heat exchange between the high temperature environment in the incinerator and the water wall, reducing the degree of thermal expansion of the incinerator body, reducing the amount of heat absorption to facilitate maintenance of the high temperature environment in the hearth, and reducing wear of the ash to the inner wall of the hearth.

According to an embodiment of the present disclosure, each set of heat conduction oil coil pipes 131 may be arranged spirally upwards in a circumferential direction of the heat exchange furnace wall 133. This arrangement is used to improve a radiation heat exchange area between the high-temperature flue gas and the heat conduction oil coil pipes, to obtain better heat exchange efficiency and heat exchange effect during the directional flow of the high-temperature flue gas in the heat exchange section. To further cope with the thermal expansion and ensure the sealing of the hearth, flexible connection seals may be provided between the adjacent two stages of heat exchange furnace walls and the support plate connecting the adjacent two stages of heat exchange furnace walls and between the incinerator body and the hot flue gas outlet, and specifically may be metal or non-metal flexible connections, or the like.

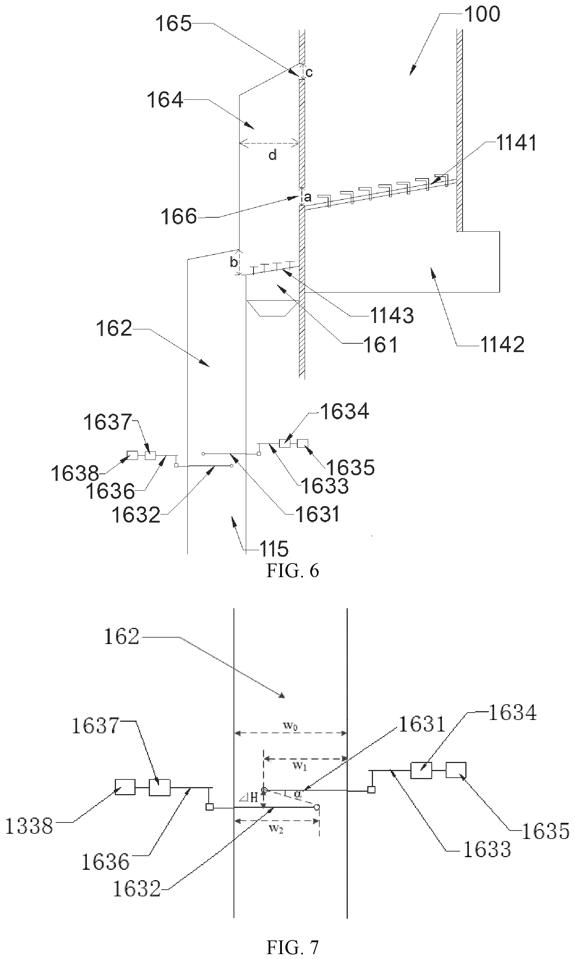

According to an embodiment of the present disclosure, as understood in conjunction with FIGS. 1 and 6, the dual-medium TFB gasification incinerator may further include an air distribution and deslagging system including the above first air distribution device 114 and a deslagging device. The first air distribution device 114 includes a primary air distributor 1141, a primary air chamber 1142, and a secondary air distributor 1143. The primary air distributor 1141 is disposed at the bottom of the incinerator body 100. The primary air chamber 1142 is disposed at a bottom of the primary air distributor 1141. The secondary air distributor 1143 is disposed outside the primary air chamber 1141. The secondary air distributor 1143 and the primary air distributor 1141 are arranged in a stepped manner, and a setting height of the secondary air distributor 1143 is lower than that of the primary air distributor 1141. The deslagging device includes a deslagging air chamber 161, a deslagging channel 162, and a deslagging valve. The deslagging air chamber 161 is provided at a bottom of the secondary air distributor 1143, and a pressure of the deslagging air chamber 161 is greater than a pressure of the primary air chamber 1142. The deslagging channel 162 connects with the incinerator body 100, and is located below the incinerator body. The deslagging channel 162 is formed adjacent to an end of the secondary air distributor 1143 away from the primary air distributor 1141, and the deslagging channel 162 has a slag discharge outlet 115. The deslagging valve includes a first deslagging valve 1631 and a second deslagging valve 1632. The first deslagging valve 1631 and the second deslagging valve 1632 are oppositely provided at an inner wall of the deslagging channel 162, and the second deslagging valve 1632 is disposed below the first deslagging valve 1631. A width of the first deslagging valve 1631 is smaller than a width of the deslagging channel 162.

At present, TFB is one of effective means for gasifying wastes. However, the garbage containing irregular massive materials (such as bricks, stones, and wires) cannot be fluidized, and needs to be discharged through a deslagging port at the bottom of the TFB. However, the irregular massive materials (such as, bricks, stones, and wires) are prone to be caught in the middle region of the gate valve in the related art, causing the deslagging port to be blocked and even deposited on the air distributor, resulting in deterioration of fluidization and thus affecting the normal operation of the gasification incinerator. The air distribution and deslagging system enables the garbage entering the hearth to first fall on the primary air distributor. Under the action of a gasifying agent in the primary air chamber, fine materials in the garbage are fluidized while coarse materials (i.e., irregular massive materials) are deposited and fall on the secondary air distributor. Thereafter under the action of the gasifying agent in the deslagging air chamber, the fine materials entrained in the coarse materials are fluidized, and the coarse materials enter the deslagging channel, thereby automatically fully separating the coarse materials and the fine materials in the garbage entering the hearth. In addition, the deslagging channel is provided with an asymmetric deslagging valve, and a space is formed between the first deslagging valve and the deslagging channel. In this way, irregular massive materials will not be completely stuck on the first deslagging valve. Since the second deslagging valve is oppositely disposed below the first deslagging valve, the irregular massive materials will also not be completely stuck on the second deslagging valve. Thus, the first deslagging valve and the second deslagging valve overlap to form a self-locking structure to lock the irregular materials, such that the materials discharged from the hearth cannot leak downwards, while the problem of irregular massive materials stuck on the deslagging valve is avoided.

According to an embodiment of the present disclosure, it may be understood with reference to FIG. 6 that the air distribution and deslagging system further includes a fluidizing gas flow channel 164. The fluidizing gas flow channel 164 is located at an upper part of the deslagging air chamber 161, and connects with the deslagging channel 162 and the incinerator body 100. The fluidizing gas flow channel 164 connects with the incinerator body 100 through a fluidizing gas circulation inlet 165 and a bulk waste outlet 166, which are arranged up and down. The fluidizing gas circulation inlet 165 is formed in a region of the lower part of the incinerator body 100, which is not higher than the top of the fluidizing gas flow channel 164. A fluidizing gas formed on the secondary air distributor 1143 sequentially flows through the fluidizing gas flow channel 164 and the fluidizing gas circulation inlet 165 into the hearth above the primary air distributor 1141. The bulk waste outlet 166 is formed at a region of the lower part of the incinerator body, which is not lower than the primary air distributor 1141. Irregular bulk materials sieve under the combined action of the primary air distributor 1141 and the primary air chamber 1142 fall onto the secondary air distributor 1143 through the bulk waste outlet 166.

Further, with reference to FIGS. 6 and 7, the air distribution and deslagging system with the above structure can achieve stable operation of the system using a structure with a given size by taking an aperture of the bulk waste outlet 166 as a, an aperture of the fluidizing gas circulation inlet 165 as c, a width of the fluidizing gas flow channel 164 as d, an aperture of the inlet of the deslagging channel 162 as b, and the width of the deslagging channel 162 as w₀, and b = (1-1.5) a, c = (0.5-0.8) a, d = (1.5-2.0) b, w₀ = (2.0-3.0) b. The principle or effect of determining dimensions of various structural parts is as follows. Determination of the dimension a depends on a discharge flow of the material and coarse and fine sieving determined in the design, to ensure that coarse slag and fine slag are discharged out of the hearth as scheduled. The width d needs to ensure that the discharged slag may achieve the separation of coarse and fine slag on the secondary air distributor, and ensure that the fine slag is carried back to the incinerator at a reasonable gas speed. If d is too large, the gas speed is too low, and the particle size carried by the gas is too small, thus causing too much fine slag to be discharged from the hearth and destroying the material sieving balance of the hearth. If d is too small, the gas speed is too high and the resistance is too large, and the amount of fine slag returned to the incinerator is also reduced, thus destroying the material sieving balance. The limitation of the width c is to ensure that the gas-solid flow entering the hearth has a pressure drop to prevent backflow. The dimension b is determined based on the pressure balance on the secondary air distributor, mainly in order to form a mechanism for coarse and fine separation. The coarse slag gradually falls into the deslagging valve through b, and the fine slag is blocked by the coarse slag on a bayonet where the fine slag is located, to rise back to the fluidizing gas flow channel in the incinerator.

It may be understood that the shapes of the bulk waste outlet 166, the fluidizing gas circulation inlet 165, and the inlet of the deslagging channel 162 are not particularly limited, and those skilled in the art can make a selection based on actual needs. For example, the shapes may be circular or rectangular, or the like. It should be noted that the aperture a of the bulk waste outlet 166, the aperture c of the fluidizing gas circulation inlet 165, and the aperture b of the inlet of the deslagging channel 162 each may independently be understood as the minimum hole spacing. For example, taking the aperture a of the bulk waste outlet 166 as an example, when the bulk waste outlet 166 is in a circular shape, a may be understood as an inner diameter of the bulk waste outlet 166, and when the bulk waste outlet 166 is in a rectangular shape, a may be understood as a short side dimension of the bulk waste outlet 166.

According to an embodiment of the present disclosure, with reference to FIG. 7, 0.5w₀≤w₁≤0.75w₀, and 0.75w₀≤w₂≤w₀, where w₀ denotes the width of the deslagging channel 162, w₁ denotes the width of the first deslagging valve 1631, and w₂ denotes the width of the second deslagging valve 1632. In this way, the first deslagging valve 1631 and the second deslagging valve 1632 both retain a suitable space from the inner wall of the deslagging channel 162, and irregular massive materials cannot completely get stuck on the first deslagging valve 1631. The second deslagging valve 1632 is oppositely disposed below the first deslagging valve 1631, and thus irregular massive materials also cannot completely get stuck on the second deslagging valve 1632. Thus, the first deslagging valve 1631 and the second deslagging valve 1632 overlap to form a self-locking structure to lock the irregular massive materials, and the massive materials therefore do not leak down while avoiding the problem that the irregular massive materials get stuck on the deslagging valve.

According to an embodiment of the present disclosure, the pressure of the primary air chamber 1142 may be in a range of 10 kPa to 15 kPa, and thus it may be further ensured that the fine material of the garbage falling on the primary air distributor 1141 is fluidized under the action of the primary air chamber 1142, and the massive material of the garbage falls on the secondary air distributor 1143, thereby achieving primary separation of the fine material and the massive material.

According to an embodiment of the present disclosure, the pressure of the deslagging air chamber 161 is in a range of 12 kPa to 20 kPa. In this way, it may be further ensured that the fine material entrained in the coarse material is fluidized and the coarse material enters the deslagging channel 162, to realize secondary separation of the fine material and the massive material, while the high pressure of the deslagging air chamber 161 provides power required for the internal circulation of the materials.

According to an embodiment of the present disclosure, the deslagging valve may further include a first rack 1633, a first speed reducer 1634, and a first motor 1635 that are provided outside the deslagging channel 162 and are all sequentially interconnected. The first rack 1633 is connected to the first deslagging valve 1631. The first motor 1635 drives the first rack 1633 to move under the action of the first speed reducer 1634, and the first rack 1633 drives the first deslagging valve 1631 to move, to open and close the first deslagging valve 1631. Similarly, the deslagging valve may further include a second rack 1636, a second speed reducer 1637, and a second motor 1638 that are provided outside the deslagging channel 162 and are all sequentially interconnected. The second rack 1636 is connected to the second deslagging valve 1632. The second motor 1638 drives the second rack 1636 to move under the action of the second speed reducer 1637, and the second rack 1636 drives the second deslagging valve 1632 to move, thereby opening and closing the second deslagging valve 1632.

According to an embodiment of the present disclosure, with reference to FIG. 7, when the deslagging valve is closed, an angle α between a horizontal plane and a connecting line between an end of the first deslagging valve 1631 away from the inner wall of the deslagging channel 162 and an end of the second deslagging valve 1632 away from the inner wall of the deslagging channel 162 is in a range of 5° to 15°, thereby making the angle α smaller than a rest angle of the massive material, and further ensuring that the first deslagging valve 1631 and the second deslagging valve 1632 lock the massive material in a closed state while avoiding the problem of irregular massive materials getting stuck on the deslagging valve.

According to an embodiment of the present disclosure, with reference to FIG. 7, a distance 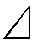 H between the first deslagging valve 1631 and the second deslagging valve 1632 is (1/4-1/3) w₀ to further ensure that the first deslagging valve 1631 and the second deslagging valve 1632 lock a massive material in the closed state, while avoiding the problem of an irregular massive material getting stuck on the deslagging valve.

According to an embodiment of the present disclosure, with reference to FIG. 6, an angle between the primary air distributor 1141 and the horizontal plane is in a range of 5° to 20°, and an angle between the secondary air distributor 1143 and the horizontal plane is in a range of 3° to 10°, thereby ensuring that the fine materials in the garbage are fully fluidized on the primary air distributor and the secondary air distributor, and ensuring that the massive materials therein fall from the primary air distributor to the secondary air distributor and fall from the secondary air distributor into the deslagging channel.

According to an embodiment of the present disclosure, valve plate thicknesses of the first deslagging valve 1631 and the second deslagging valve 1632 may be independently in a range of 20 mm to 35 mm, thereby further ensuring that the irregular massive material is locked under the overlapping action of the first deslagging valve 1631 and the second deslagging valve 1632. Therefore, the massive material does not leak down.

### Gas-solid Separator 200

According to an embodiment of the present disclosure, the fluidized material completes gasification under the action of the gasifying agent. A gasified gas enters the combustion section, and combusts in the combustion section. A flue gas obtained after the combustion subsequently enters the heat exchange section. After the heat exchange of the flue gas is completed in the heat exchange section, the flue gas enters the gas-solid separator for gas-solid separation, and most of the ash is separated and discharged through an ash discharge outlet (i.e., a second ash discharge outlet 210) formed at a bottom of the gas-solid separator 200.

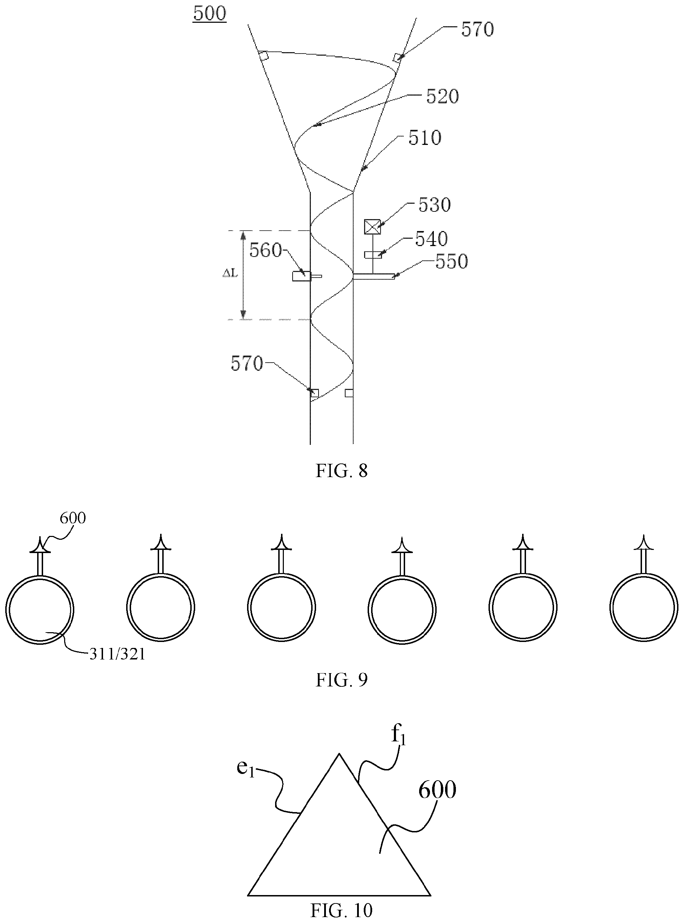

According to an embodiment of the present disclosure, with reference to FIG. 8, the dual-medium TFB gasification incinerator may further include an ash discharging device 500 connected to the second ash discharge outlet 210. The ash discharging device 500 may include an ash hopper 510, a spiral scraper 520, a gear 550, a coupler 540, and a motor 530. The ash hopper 510 is in a cylindrical shape. The spiral scraper 520 is provided inside the ash hopper 510. An end of the gear 550 is connected to the spiral scraper 520, and is sealed with the ash hopper 510. The coupler 540 is connected to another end of the gear 550, and the motor 530 is connected to the coupler 540. Domestic waste, industrial combustible waste, hazardous waste, and biomass generate a large amount of medium-high temperature gas in the combustion or gasification process. The medium-high temperature gas contains medium-high temperature ash, which is usually in a porous and fluffy state with a small true density. The medium-high temperature ash has a strong binding property, and easily bonds to form masses at various ash hoppers, such as a lower ash hopper of a separator of a fluidized bed, an ash hopper connecting a second channel and a third channel of an incinerator row, and ash hoppers of various incinerator-type tail shafts, thereby blocking the ash hoppers. In order to avoid this problem, in the present disclosure, the ash discharging device is provided so that the motor drives the gear via the coupler, and the gear drives the spiral scraper to rotate left and right in the ash hopper, to achieve the purpose of scraping the layer of ash bonded on the inner wall of the ash hopper. This can ensure that the medium-high temperature ash flows smoothly through the ash hopper, and avoid the problem that the medium-high temperature ash is bonded to the inner wall of the ash hopper to form masses. Thus, it is possible to obtain a highly reliable ash-delivering effect with lower energy consumption and less wear, to ensure that the medium-high temperature ash flow discharged from the gas-solid separator can be smoothly discharged through the ash hopper. In addition, the ash discharging device has a simple structure and thus is not easy to deform at a medium-high temperature. However, the conventional device in the related art has a complicated structure and is hardly to achieve un-deformed at a medium-high temperature.

According to an embodiment of the present disclosure, the specific structure of the ash hopper 510 is not particularly limited, and those skilled in the art can select based on actual needs. For example, in a specific example of the present disclosure with reference to FIG. 8, the ash hopper 510 may include an integrally formed conical ash hopper and a cylindrical ash hopper, and the conical ash hopper is disposed above the cylindrical ash hopper. In a preferable embodiment, the gear 550 may be installed at a middle position of the cylindrical ash hopper.

According to an embodiment of the present disclosure, the spiral scraper 520 may include a plurality of spiral sub-scrapers, and adjacent spiral sub-scrapers may be connected by a rivet to form a whole spiral scraper. In this way, a gap exists between the adjacent spiral sub-scrapers. After the spiral scraper is thermally expanded, the gap accommodates the expansion amount to ensure that the whole spiral scraper is not deformed after being heated. Further, according to a specific example of the present disclosure, the spiral sub-scraper in the conical ash hopper may have a spiral shape and is formed by winding a heat-resistant steel sheet, is shaped by heat treatment, and is directly placed in the ash hopper.

According to an embodiment of the present disclosure, the material of the spiral scraper 520 is not particularly limited as long as it is not easily deformed at a high temperature, and those skilled in the art can make a selection based on actual needs. For example, the material of the spiral scraper 520 may be 2520 heat-resistant steel, 310, 314, or 316 heat-resistant steel with a high nickel-chromium content, or the like.

According to an embodiment of the present disclosure, a pitch 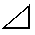 L of the spiral scraper 520 satisfies 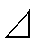 L = (1/2-3/2) D, where D is an average value of outer diameters of the ash hopper in a pitch range. The above definition of the pitch is a distance between two adjacent threads measured in the helical line direction, i.e., an axial distance between two points corresponding to the two adjacent threads on a pitch line. Thus, limiting the pitch of the spiral scraper 520 within the above range, the spiral scraper 520 may be sufficiently scraped to an inner wall of the ash hopper by an angle. If the pitch is too large, the spiral scraper 520 may scrape the inner wall of the ash hopper insufficiently. If the pitch is too small, it may cause energy waste and unnecessarily wear the inner wall of the ash hopper and the spiral scraper 520.

According to an embodiment of the present disclosure, a rotation angle of the spiral scraper 520 in a circumferential direction of the ash hopper 510 may be in a range of 60° to 90°. In this way, the purpose of sufficiently scraping the layer of ash adhered to the inner wall of the ash hopper is achieved by defining the rotation angle of the spiral scraper 520 in the circumferential direction of the ash hopper 510 within the above range. If the rotation angle is too small, the spiral scraper 520 may scrape the inner wall of the ash hopper insufficiently. If the rotation angle is too large, it may cause energy waste and unnecessarily wear the inner wall of the ash hopper and the spiral scraper 520. It will be appreciated that the rotation of the spiral scraper 520 in the circumferential direction of the ash hopper 510 is a reciprocal rotation. That is, after the spiral scraper 520 rotates by 60-90° in the circumferential direction of the ash hopper 510, the spiral scraper 520 stops rotating in the original direction and then rotates in a reverse direction. Control of the rotation angle of the spiral scraper 520 in the circumferential direction of the ash hopper 510 may be achieved by a pulse signal using a stepping motor 530. However, the stepping motor 530 is expensive. Therefore, the control may also be achieved by the common motor 530 cooperating with limit protrusions.

According to an embodiment of the present disclosure, a width of the spiral scraper 520 may be in a range of 1/4 to 1/3 of a circumference of the inner wall of the ash hopper in the circumferential direction where the spiral scraper 520 is located. A corresponding circumferential angle may be in a range of 90° to 120°, which is greater than the rotation angle of 60-90°, thereby ensuring that the layer of ash adhered to the inner wall of the ash hopper is sufficiently scraped. It is noted that the spiral scraper 520 is curved in a width direction thereof and in a shape of strip-shaped cylinder, and is attached to an inner wall surface of the ash hopper 510.

According to an embodiment of the present disclosure, as shown in FIG. 8, the ash discharging device may further include a plurality of limit protrusions 570, which may be provided at the inner wall of the ash hopper. The function of the limit protrusions 570 is to limit a range of left and right rotations of the spiral scraper 520 in the ash hopper 510. When the spiral scraper 520 collides the limit protrusions 570 during rotation, the spiral scraper 520 stops rotating in the original direction and then rotates in a reverse direction, thereby limiting the rotation of the spiral scraper 520 in the range of 60-90° in the circumferential direction of the ash hopper 510. Further, the plurality of limit protrusions 570 may break flatness of the inner wall of the ash hopper, and thus have an effect of preventing the medium-high temperature ash from sticking to the inner wall of the ash hopper to cause hardening to some extent.

According to an embodiment of the present disclosure, with reference to FIG. 8, the ash discharging device 500 may further include a temperature measurer 560, which may be provided at the wall of the ash hopper 510 and penetrate the ash hopper 510, to monitor a fluctuation signal of the temperature of the ash flowing in the ash hopper 510. It may be understood that when the medium-high temperature ash flows normally in the ash hopper 510, there will be a certain temperature fluctuation. If the detected temperature is stable and does not fluctuate, it means that the ash in the ash hopper 510 does not flow, i.e., the ash hopper 510 is blocked by the ash bonded to form masses. In this case, it is required to start the motor 530 to rotate the spiral scraper 520 to scrape the ash. In a preferable embodiment, when the temperature fluctuation of the ash in the ash hopper is lower than 5 °C/10 min as monitored by the temperature measurer 560, the motor 530 may be started to rotate the spiral scraper 520 for scraping ash.

According to an embodiment of the present disclosure, the ash discharging device 500 may further include a PLC control unit (not shown in the figure), which may be respectively connected to the temperature measurer 560 and the motor via an electric signal. The temperature measurer 560 may transmit the detected temperature signal of the ash in the ash hopper to the PLC control unit. The PLC control unit then performs signal analysis based on the received temperature of the ash in the ash hopper, and determines whether to start the motor based on the fluctuation amplitude and the frequency determined in the experiment to drive the spiral scraper to rotate. Therefore, automated ash discharging is achieved.

According to an embodiment of the present disclosure, a method for discharging ash by the above ash discharging device may include: monitoring temperature fluctuation of ash in the ash hopper by a temperature measurer; when the temperature fluctuation of the ash in the ash hopper is lower than 5 °C/10 min, starting the motor; driving the gear to rotate by the motor via the coupler, and driving the spiral scraper to rotate by the gear, to achieve the purpose of scraping the layer of ash bonded on the inner wall of the ash hopper; and when the layer of ash on the inner wall of the ash hopper is removed completely, stopping the operation of the motor. According to the ash discharging method, the temperature measurer is used to monitor the temperature fluctuation of the ash in the ash hopper. In this way, when the temperature fluctuation of the ash in the ash hopper is lower than 5 °C/10 min, the motor is started; the motor drives the gear to rotate via a coupler; the gear drives the spiral scraper to rotate clockwise and counterclockwise alternately in the ash hopper to scrape the layer of ash bonded on the inner wall of the ash hopper; and when the layer of ash on the inner wall of the ash hopper is removed completely, the motor stops operating. As a result, it is possible to ensure that the ash flows smoothly through the ash hopper to avoid the problem of ash bonded on the inner wall of the ash hopper to form masses, to obtain a highly reliable ash-delivering effect with lower energy consumption and less wear, and to ensure that the ash flows smoothly through the ash hopper at a medium-high temperature.

### Waste Heat Recovery Device 300

According to an embodiment of the present disclosure, with reference to FIGS. 1 to 4, the waste heat recovery device 300 may be provided with at least one set of heat conduction oil pipe row 310 in a height direction thereof. Further, in the height direction of the waste heat recovery device 300, each set of the heat conduction oil pipe row 310 may include a plurality of layers of heat conduction oil heat-exchange pipes 311 arranged in a staggered parallel manner. This arrangement can not only greatly improve a heat exchange area between the high-temperature flue gas and the heat conduction oil pipe rows, and improve the heat exchange efficiency and heat exchange effect, but also facilitate the deposition of ash carried in the high-temperature flue gas during the contact with the heat conduction oil pipe rows, and improve the flue gas purification effect. It may be understood that, in each set of the heat conduction oil pipe row 310, multiple layers of heat conduction oil heat-exchange pipes may be independently provided in parallel, or may be provided continuously in series. In addition, the number of layers of heat conduction oil heat-exchange pipes 311 in each set of heat conduction oil pipe row 310 is not particularly limited, and those skilled in the art can flexibly make choices based on actual needs.

According to an embodiment of the present disclosure, with reference to FIGS. 1 to 4, at least one group of the economizer 320 may be provided in the waste heat recovery device 300 based on actual needs. A steam drum (not shown) may be connected to an upper part of the economizer 320.

According to an embodiment of the present disclosure, it is understood with reference to FIG. 4 that the air preheater 330 may be further provided with a partition 333. The partition 333 divides the air preheater 330 into a first air preheater 331 and a second air preheater 332 that are arranged up and down or horizontally side by side. The first air preheater 331 includes a first cold air inlet and a first hot air outlet, and the second air preheater 332 includes a second cold air inlet and a second hot air outlet. One of the first hot air outlet and the second hot air outlet is connected to the air inlet 121 of the combustion section 120, and another one of the first hot air outlet and the second hot air outlet is connected to the air inlet 116 and/or the air inlet 117 of the gasification section 110. It will be appreciated that the first air preheater 331 and the second air preheater 332 are two relatively independent air preheating units. In a practical operation process, pressures and temperatures required by the gasifying agent supplied to the gasification section and the combustion air supplied to the combustion section are not exactly the same. For example, the gasifying agent supplied to the gasification section may have a temperature in a range of 150°C to 200°C and a pressure in a range of 10 kPa to 15 kPa, and the combustion air supplied to the combustion section may have a temperature in a range of 100°C to 200°C and a pressure in a range of 4 kPa to 6 kPa. When the partition is horizontally disposed, the air preheater 330 may be divided into two parts arranged up and down, in which a temperature of a hot air output by the upper air preheater is higher than that of the lower air preheater. When the partition is vertically disposed, the air preheater 330 may be divided into two parts arranged side by side horizontally (e.g., left and right arrangement). In this case, one of the first air preheater and the second air preheater may be selected to be connected to the air inlet (s) (116, and/or 117) of the gasification section, and another one of the first air preheater and the second air preheater may be connected to the air inlet 121 of the combustion section, based on the temperature and pressure requirements of the gasifying agent and the combustion air. The respective pressures of the two preheaters may be controlled separately.

According to an embodiment of the present disclosure, with reference to FIG. 4, the waste heat recovery device 300 is provided with a flue gas exhaust port 350 at the lower part thereof and a first ash discharge outlet 340 at the bottom thereof. The flue gas exhaust port 350 is located below the air preheater 330, and is connected to a flue gas purification device.

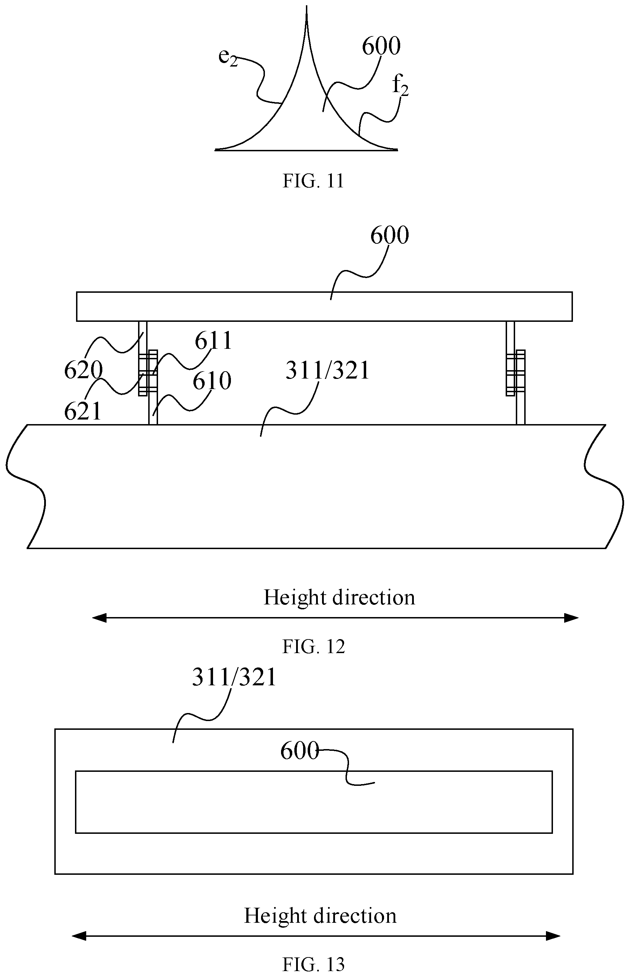

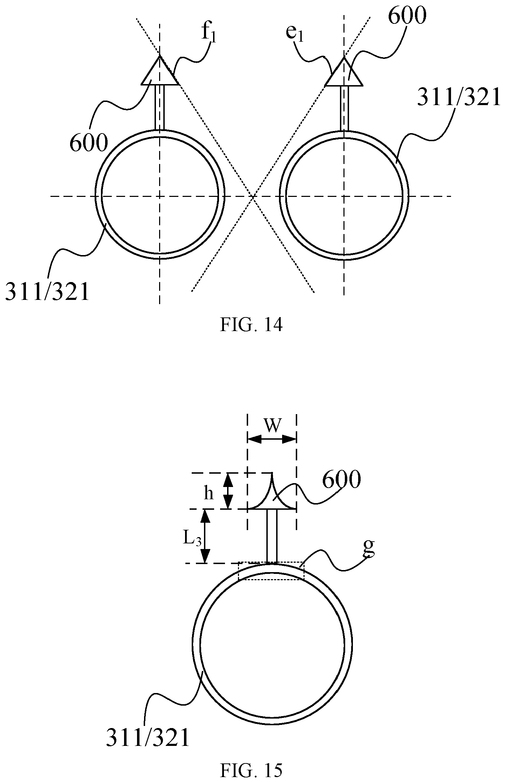

According to an embodiment of the present disclosure, the heat conduction oil pipe row 310 may include at least one layer of heat conduction oil heat-exchange pipes 311, and each layer of heat conduction oil heat-exchange pipes 311 may include a plurality of heat conduction oil heat exchange-pipes 311 arranged at intervals. Referring to FIG. 9, at least one of the heat conduction oil heat-exchange pipes is provided with an anti-wear plate 600 at a windward surface thereof. In addition or in another embodiment of the present disclosure, the economizer 320 includes at least one layer of heat-conducting water heat-exchange pipes, and each layer of heat-conducting water heat-exchange pipes include a plurality of heat-conducting water heat-exchange pipes 321 arranged at intervals. At least one of the heat-conducting water heat-exchange pipes 321 is provided with an anti-wear plate 600 at a windward surface thereof with reference to FIG. 9. The anti-wear plate 600 is detachably disposed in a length direction of the heat-exchange pipe, with reference to FIG. 12 or FIG. 13. A cross section of the anti-wear plate 600 perpendicular to the length direction of the anti-wear plate has a triangle shape (as shown in FIG. 10) or a triangle-like shape with a hyperbolic structure (as shown in FIG. 11), and a vertex of the triangle shape (i.e., an intersection of the e₁ plane and the f₁ plane in FIG. 10) or an intersection of the hyperbolic structure (i.e., an intersection of the e₂ plane and the f₂ plane in FIG. 11) is located on a side of the anti-wear plate 600 away from the heat-exchange pipe. When the dual-medium TFB gasification incinerator of the present disclosure is used to treat biomass, garbage, sludge, and various hazardous wastes, the produced flue gas generally has the characteristics of high-water content, high alkali metal content, easy slag-bonding, and ash deposition. When the waste heat of the above flue gas is recycled, a convection heating surface of a convection heat exchange device (such as, a heat conduction oil pipe row and an economizer) is mostly arranged in pipe rows. With the characteristics of high moisture content, high alkali content, easy slag-bonding, and ash deposition in the flue gas, ash deposition and slag-bonding in a region where the windward surface of the heat-exchange pipe is relatively flat may lead to failure to shut down the incinerator and affect the normal and efficient operation of a high incinerator. Concerning the convection heat exchange device, the greater the curvature of the heat exchange pipe is, the less likely it is to deposit ash. That is, a side surface of the convection heat exchange pipe is not likely to deposit ash, and the position where ash is most likely to deposit is located in a relatively flat region (a region g as shown in FIG. 15) at the windward surface of the heat-exchange pipe. An anti-wear plate is provided on the windward surface of the heat-exchange pipe. On the one hand, inclined surfaces (the e₁ surface and the f₁ surface as shown in FIG. 10) or curved surfaces (the e₂ surface and the f₂ surface as shown in FIG. 11) of the anti-wear plate may be used to change a movement path of ash in the flue gas, in such a manner that the ash is dropped along the inclined surfaces or the curved surfaces of the anti-wear plate, to avoid direct contact between the ash in the flue gas and the windward surface of the heat-exchange pipe to prevent ash slag-bonding and ash deposition on the windward surface of the heat-exchange pipe. On the other hand, the abrasion of the ash on the heat-exchange pipes can be reduced. In addition, the anti-wear plate may be replaced when there is significant slag-bonding, ash deposition, or failure. Thus, the detachable anti-wear plate is provided on the windward surface of the heat-exchange pipe, and the cross section of the anti-wear plate is controlled to be a triangle shape or a triangle-like triangle with a hyperbolic structure, such that the anti-slag-bonding performance of the windward surface of the heat-exchange pipe can be effectively improved, the probability of incinerator shutdown due to ash deposition and slag-bonding can be greatly reduced, and the continuous operation time of the incinerator and the like can be significantly improved.

According to an embodiment of the present disclosure, with reference to FIG. 9 or FIG. 14, the anti-wear plate 600 may be suspended from the heat conduction oil heat-exchange pipe 311 or the heat-conducting water heat-exchange pipe 321. When the bottom of the anti-wear plate 600 is fixed in direct contact with the heat-exchange pipe, although the problem of slag-bonding and ash deposition on the windward surface of the heat-exchange pipe can be solved, the effective contact area between the heat-exchange pipe and the high-temperature flue gas may be affected, and the heat exchange efficiency and effect may be affected. The anti-wear plate 600 is hung on the heat-exchange pipe. On the one hand, the windward surface of the heat-exchange pipe has the performance of anti-slag-bonding and ash deposition under the premise of ensuring the heat exchange efficiency and the heat exchange effect. On the other hand, under the premise that the inclined surfaces or curved surfaces of the anti-wear plate are fixed, controlling the anti-wear plate to have a certain suspension height can further reduce the contact probability between ash in the high-temperature flue gas and the heat-exchange pipe, thereby reducing the wear on the heat-exchange pipe.

According to an embodiment of the present disclosure, with reference to FIGS. 10 and 11 or FIG. 14, the cross-section of the anti-wear plate 600 (this cross-section is perpendicular to the length direction of the anti-wear plate) may have a triangular shape or a triangular-like shape that is an axisymmetric pattern, and an axis of symmetry of the triangle or triangle-like shape coincides with a perpendicular from a vertex of the triangle or the intersection of the hyperbolas to a central axis of the heat-exchange pipe. Thus, not only the problem of ash-bonding and ash deposition on the windward surface of the heat-exchange pipe can be solved, but also parts of the heat-exchange pipe located on two sides of the anti-wear plate can achieve the same anti-slag-bonding and anti-ash deposition performance and anti-wear effect while helping to improve the load uniformity of the anti-wear plate during use.

According to an embodiment of the present disclosure, with reference to FIG. 15, a width W of the anti-wear plate 600 at a side near the heat-exchange pipe may be 0.2 times to 0.5 times the outer diameter of the heat-exchange pipe, for example, may be 0.25 times, 0.3 times, 0.35 times, 0.4 times, or 0.45 times the outer diameter of the heat-exchange pipe. If the width of the anti-wear plate 600 at the side near the heat-exchange pipe is too small, it is difficult to completely solve the problem that the ash in a relatively flat region on the windward surface of the heat-exchange pipe is prone to be bonded and deposited. If this width is too large, it will not only increase the cost of raw materials and the difficulty of fixing the anti-wear plate, but also affect the effective convective contact area between the heat-exchange pipe and the high-temperature flue gas and affect the heat exchange effect. In the present disclosure, controlling the width of the anti-wear plate at the side near the heat-exchange pipe to be within the above range is more beneficial to ensure the heat exchange effect based on avoiding slag-bonding and ash deposition on the windward surface of the heat-exchange pipe, and reduces the cost of raw materials of the anti-wear plate and the fixing difficulty.

According to an embodiment of the present disclosure, with reference to FIG. 15, when the width W of the anti-wear plate 600 at the side near the heat-exchange pipe is 0.2 times to 0.5 times the outer diameter of the heat-exchange pipe, the height h of the anti-wear plate 600 may be 0.05 times to 0.1 times the outer diameter of the heat-exchange pipe. For example, the height h of the anti-wear plate 600 may be 0.06 times, 0.07 times, 0.08 times, or 0.09 times the outer diameter of the heat-exchange pipe. Controlling the height of the anti-wear plate to be within the above range can control directions of the inclined surfaces (such as the e₁ surface and the f₁ surface in FIG. 10) or directions of the curved surfaces (such as the e₂ surface and the f₂ surface in FIG. 11) of the anti-wear plate. In this way, a direction in which the ash slides along the anti-wear plate is more likely to move away from the relatively flat region on the windward surface of the heat-exchange pipe (with reference to extension lines of e₁ and f₁ surfaces in FIG. 14), thereby not only facilitating to solve the problem that the ash is prone to be bonded and deposited on the relatively flat surface on the windward surface of the heat-exchange pipe, but also facilitating to reduce the abrasion of the heat-exchange pipe caused by the ash flowing along with the flue gas. Further, based on the above dimensional conditions of the above anti-wear plate, it may be understood with reference to FIG. 15 that a distance L3 between the side of the anti-wear plate 600 close to the heat-exchange pipe and the heat-exchange pipe may be 0.3 times to 0.6 times the outer diameter of the heat-exchange pipe, and for example, may be 0.35 times, 0.4 times, 0.45 times, 0.5 times, or 0.55 times the outer diameter of the heat-exchange pipe. The distance between the side of the anti-wear plate close to the heat-exchange pipe and the heat-exchange pipe is controlled to be within the above range, such that it is more advantageous to reduce the probability of the ash in the flue gas contacting the heat-exchange pipe, to ensure that the ash cannot be bonded and deposited on the windward surface of the heat-exchange pipe.

According to an embodiment of the present disclosure, with reference to FIG. 14, the extension lines of the inclined surfaces e₁ and f₁ of the anti-wear plate may be located between two adjacent heat-exchange pipes, or extension lines of asymptotic lines of the curved surfaces e₂ and f₂ of the anti-wear plate may be located between two adjacent heat-exchange pipes, thereby further ensuring that the arrangement of the anti-wear plate can reduce the probability of the ash in the flue gas contacting the heat-exchange pipes, and ensuring that the ash cannot be bonded and deposited on the windward surface of the heat-exchange pipes.

According to an embodiment of the present disclosure, the distance between the anti-wear plate 600 and the heat-exchange pipes is adjustable, as understood with reference to FIG. 12. As for the same anti-wear plate, when the outer diameter of the heat-exchange pipes and the distance between two adjacent heat-exchange pipes change, the optimal distance between the anti-wear plate and the heat-exchange pipes will also change. Controlling the distance between the anti-wear plate and the heat-exchange pipes to be adjustable is more conducive to adjusting the distance between the anti-wear plate and the heat-exchange pipes based on actual situations, to achieve a better effect of anti-slag-bonding and anti-ash deposition and wear prevention effect.

According to an embodiment of the present disclosure, it may be understood that the connection manner between the anti-wear plate 600 and the heat-exchange pipes is not particularly limited, and those skilled in the art can select based on actual needs as long as the anti-wear plate and the heat-exchange pipes are detachably connected. The distance between the anti-wear plate and the heat-exchange pipes is preferably adjustable. For example, with reference to FIG. 12, the top of the heat-exchange pipe may be provided with a support 610, and at least one first connection hole 611 may be formed in the support 610. The anti-wear plate 600 may be provided with a connection rod 620 at the bottom thereof, and the connection rod 620 may have at least one second connection hole 621 matching with the first connection hole 611. The heat-exchange pipes and the anti-wear plate 600 may be fixed by the support 610 and the connection rod 620, for example, may be fixed via bolts, a snap-fit connection, or latch fixture. Therefore, the removable connection of the anti-wear plate and the heat-exchange pipes can be achieved, and the pitch between them can be advantageously controlled.

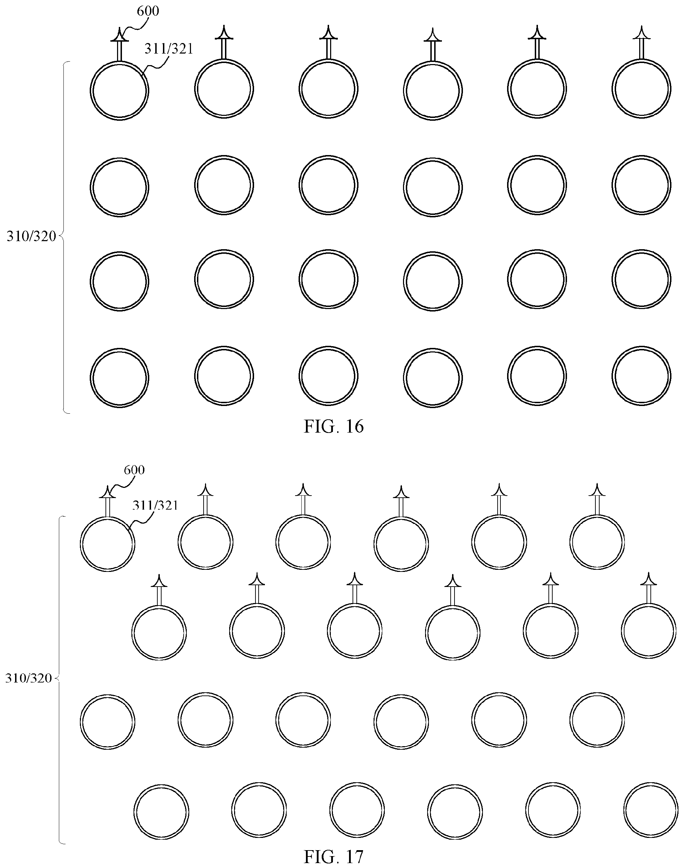

According to an embodiment of the present disclosure, with reference to FIG. 16, the heat conduction oil pipe row 310 may include a plurality of rows of heat conduction oil heat-exchange pipes 311 arranged in parallel and in line. In a row of heat conduction oil heat-exchange pipes 311 on a side of the plurality of rows of the heat conduction oil pipes 310 closest to the flue gas inlet of the waste heat recovery device 300, a windward surface of each of the heat conduction oil heat-exchange pipes 311 is provided with an anti-wear plate 600. In another exemplary embodiment of the present disclosure, the heat conduction oil pipe row 310 may include a plurality of rows of heat conduction oil heat-exchange pipes 311 arranged in a staggered parallel manner. In at least two rows of heat conduction oil heat-exchange pipes 311 arranged in a staggered manner on the side of the plurality of rows of the heat conduction oil pipes 310 closest to the flue gas inlet of the waste heat recovery device 300, a windward surface of each of the heat conduction oil heat-exchange pipes 311 is provided with an anti-wear plate 600, thereby further avoiding the problem of slag-bonding and ash deposition of the ash in the flue gas on the windward surfaces of the heat conduction oil heat-exchange pipes.

According to an embodiment of the present disclosure, with reference to FIG. 17, the economizer 320 may include a plurality of rows of heat-conducting water heat-exchange pipes 321 arranged in parallel and in line. In a row of heat-conducting water heat-exchange pipes on a side of the economizer 320 closest to the flue gas inlet of the waste heat recovery device 300, a windward surface of each of the heat-conducting water heat-exchange pipes 321 is provided with an anti-wear plate 600. In another exemplary embodiment of the present disclosure, the economizer 320 may include a plurality of rows of heat-conducting water heat-exchange pipes 321 arranged in a staggered parallel manner. In at least two rows of heat-conducting water heat-exchange pipes 321 arranged in a staggered manner on the side of the economizer 320 closest to the flue gas inlet of the waste heat recovery device 300, the windward surface of each of the heat-conducting water heat-exchange pipes 321 is provided with an anti-wear plate 600, thereby further avoiding the problem of slag-bonding and ash deposition of the ash in the flue gas on the windward surfaces of the heat-conducting water heat-exchange pipes.

In summary, the dual-medium TFB gasification incinerator of the above embodiments of the present disclosure may have the following beneficial effects.
(1) The maximum thermal efficiency can be realized by combining the heat conduction oil and water as main cooling media, and providing, based on energy grade, water walls, heat conduction oil coil pipes, heat conduction oil convection pipe rows, economizer pipe rows within which water is heat transfer medium, and an air preheater. On the one hand, the heat exchange efficiency is much higher than those of other kind of incinerators with single heat transfer medium, and the process heat in the form of hot oil and steam can be obtained, which is convenient for heat consumption in production operations in industries of chemistry, food, and organic fertilizer, etc. On the other hand, the gasification agent in the gasification section and/or the combustion supporting air in the combustion section can be preheated to improve the efficiency of gasification and combustion and to reduce the production cost. In addition, the incinerator body is suspended by incinerator body support to form 'lower suspension and upper support' structure of the main furnace, so that the incinerator body (combined with gravity) can be expanded downwards with the joints of the incinerator body support and the incinerator body as the fixed ends, and the sealing of the incinerator body will not be affected during the expansion process. Therefore, the thermal expansion sealing issue can be effectively addressed between the lower incinerator body formed by evaporation heating surface of the water wall and the upper incinerator body formed by the heat conduction oil coil pipes, and the structural instability and safety issues of the incinerator body caused by the poor sealing due to thermal expansion can be prevented.
(2) The air distribution and deslagging system enables the garbage entering the hearth to first fall on the primary air distributor. Under the action of a gasifying agent in the primary air chamber, fine materials in the garbage are fluidized while coarse materials (i.e., irregular massive materials) are deposited and fall on the secondary air distributor. Thereafter under the action of the gasifying agent in the deslagging air chamber, the fine materials entrained in the coarse materials are fluidized, and the coarse materials enter the deslagging channel, thereby automatically fully separating the coarse materials and the fine materials in the garbage entering the hearth. In addition, the deslagging channel is provided with an asymmetric deslagging valve, and a space is formed between the first deslagging valve and the deslagging channel. In this way, irregular massive materials will not be completely stuck on the first deslagging valve. Since the second deslagging valve is oppositely disposed below the first deslagging valve, the irregular massive materials will also not be completely stuck on the second deslagging valve. Thus, the first deslagging valve and the second deslagging valve overlap to form a self-locking structure to lock the irregular materials, such that the materials discharged from the hearth cannot leak downwards, while the problem of irregular massive materials stuck on the deslagging valve is avoided.
(3) The ash discharging device is provided so that the motor drives the gear via the coupler, and the gear drives the spiral scraper to rotate left and right in the ash hopper, to achieve the purpose of scraping the layer of ash bonded on the inner wall of the ash hopper. This can ensure that the medium-high temperature ash that has been separated by the gasification separator flows smoothly through the ash hopper, and avoid the problem that the medium-high temperature ash is bonded to the inner wall of the ash hopper to form masses. Thus, it is possible to obtain a highly reliable ash-delivering effect with a lower energy consumption and less wear, to ensure that the medium-high temperature ash flow smoothly flows through the ash hopper. In addition, the ash discharging device has a simple structure and thus is not easy to deform at a medium-high temperature. However, the conventional device in the related art has a complicated structure, and thus the ash discharging device of the present disclosure has significant improvement as compared to the ash discharging device in the related art that is hardly to achieve un-deformed at a medium-high temperature.
(4) The above anti-wear plate is provided on the windward surface of the heat-exchange pipe. On the one hand, inclined surfaces or curved surfaces of the anti-wear plate may be used to change a movement path of ash in the flue gas, in such a manner that the ash is dropped along the inclined surfaces or the curved surfaces of the anti-wear plate, to avoid direct contact between the ash in the flue gas and the windward surface of the heat-exchange pipe to prevent ash slag-bonding and ash deposition on the windward surface of the heat-exchange pipe. On the other hand, the abrasion of the ash on the heat-exchange pipes can be reduced. In addition, the anti-wear plate may be replaced when there is significant slag-bonding, ash deposition, or failure. Thus, the anti-slag-bonding performance of the windward surface of the heat-exchange pipe can be effectively improved, the probability of incinerator shutdown due to ash deposition and slag-bonding can be greatly reduced, and the continuous operation time of the incinerator and the like can be significantly improved.
(5) The incinerator can be used to treat a variety of wastes that are difficult in treatment, and treat various forms and types of wastes, such as solid, liquid, and semi-fluid, with stable operation and good durability. The incinerator can effectively solve the heat expansion sealing problem and improve the heat exchange efficiency and effect of the high-temperature flue gas, to realize the recovery and reuse of process heat. According to the level of energy, the process heat carried by the hot oil and the steam after heat exchange can be used in the production of chemical industry, food, organic fertilizer, and the like.

According to still another aspect of the present disclosure, the present disclosure provides an implementation method of a waste gasification incineration based on the utilization of the above dual-medium TFB gasification incinerator. According to an embodiment of the present disclosure, the method includes operations below.
(1) A waste material is supplied to the gasification section at the lower part of the incinerator body for gasification to obtain a gasified gas and solid residues, which are discharged out of the incinerator intermittently. According to an embodiment of the present disclosure, the temperature of the gasification section is in a range of 650°C to 850°C, and the gasifying agent supplied to the gasification section has the temperature in a range of 150°C to 200°C and the pressure in a range of 10 kPa to 15 kPa. It should be noted that the selection of gasification section and process parameters of the gasifying agent, as well as the selection of waste materials are described in detail in the foregoing description, and therefore will not be described in detail herein.
(2) The gasified gas is imported to the combustion section in the middle of the incinerator body for combustion to obtain a combusted high-temperature flue gas. According to an embodiment of the present disclosure, the temperature of the combustion section is between 850°C and 1100°C. The combustion air supplied to the combustion section has a temperature in a range of 100°C to 200°C and a pressure in a range of 4 kPa to 6 kPa. It should be noted that the features associated with the combustion section, the selection of process parameters of the combustion air, and the like have been described in detail in the preceding description, and therefore will not be repeated herein.
(3) The combusted high-temperature flue gas is cooled by heat exchange with the heat conduction oil coil pipes to obtain a medium-temperature flue gas. According to an embodiment of the present disclosure, the temperature of the flue gas after being heat-exchanged by the heat conduction oil coil pipes is in a range of 500°C to 600°C. It needs to be stated that relevant features, such as the heat conduction oil coil pipes and heat exchange parameters, have been described in detail in the preceding description, and therefore will not be described in detail herein.
(4) Gas-solid separation is performed on the medium temperature flue gas by the gas-solid separator to obtain a primary purified flue gas.
(5) The primary purified flue gas is introduced into the waste heat recovery device, and is discharged after heat exchange sequentially through the heat conduction oil pipe row, the economizer, and the air preheater. According to an embodiment of the present disclosure, the temperature of the flue gas after heat exchange through the heat conduction oil pipe row is in a range of 370°C to 430°C, and the temperature of the flue gas after heat exchange through the air preheater is in a range of 170°C to 190°C. It should be noted that the relevant features and contents of the heat conduction oil pipe row, the economizer, and the air preheater as well as the heat exchange effect have been described in detail in the previous description, and therefore the detailed description thereof will not be repeated herein.

According to an embodiment of the present disclosure, the implementation method of the waste gasification incineration may further include: automatically separating the coarse material and the fine material in the garbage entering the hearth by the air distribution and deslagging system, and forming a self-locking structure by the superposition of the first deslagging valve and the second deslagging valve to lock irregular materials. In this way, the material discharged from the hearth does not leak down, while the problem of the irregular mass material stuck on the deslagging valve is avoided. It should be noted that the relevant features and contents of the air distribution and deslagging system have been described in detail in the previous description, and therefore will not be described again herein.

According to an embodiment of the present disclosure, the implementation method of the waste gasification incineration may further include: using an ash discharging device, to ensure that the medium-high temperature ash flow discharged from the gas-solid separator is discharged smoothly through the ash hopper, and obtain a high-reliability ash-delivering effect with lower energy consumption and less wear. In an exemplary embodiment of the present disclosure, the motor drives the gear via the coupler, and the gear drives the spiral scraper to rotate left and right in the ash hopper, to achieve the purpose of scraping the layer of ash bonded on the inner wall of the ash hopper. This can ensure that the medium-high temperature ash flows smoothly through the ash hopper, and avoid the problem that the medium-high temperature ash is bonded to the inner wall of the ash hopper to form masses. It should be noted that the relevant features and contents of the ash discharging device have been described in detail in the preceding description, and therefore will not be described in detail herein.

According to an embodiment of the present disclosure, the implementation method of the waste gasification incineration may further include: providing an anti-wear plate at a convection heat-exchange pipe of the waste heat recovery device to effectively improve the anti-slag-bonding performance of the windward surface of the heat-exchange pipe, greatly reduce the probability of incinerator shutdown due to ash deposition and slag-bonding, and significantly improve the continuous operation time of the incinerator. It should be noted that the relevant features and contents of the anti-wear plate have been described in detail in the preceding description, and therefore will not be described in detail herein.

In summary, according to the implementation method of the waste gasification incineration, illustrated in the above embodiment of the present disclosure, during waste incineration, full resource utilization of high-temperature flue gas heat can be achieved step by step according to the flue gas flow path, resulting the improved heat exchange efficiency. In addition, the thermal expansion sealing issue of the incinerator body can be effectively addressed through the above method, preventing problems of structural instability, poor sealing property of the incinerator body, and potential safety risks caused by thermal expansion. Thus, the method is simple in process, and easy in operation, and achieves high energy grade, which not only realizes the full resource recovery and detoxification treatment of waste materials but also ensure the stability and safety of the incinerator structure. The benefits of using the air distribution and deslagging system, ash discharging device, and anti-wear plate have been described in detail in the previous description and will not be described in detail herein. It should be noted that the features and effects described for the dual-medium TFB gasification incinerator in the above embodiments of the present disclosure are also applicable to the implementation method of the waste gasification incineration, and will not be described in detail herein.

In the description of this specification, reference to the description of the terms "an embodiment," "some embodiments," "an example," "particular examples," or "some examples," etc., means that a particular feature, structure, material, or characteristic described in connection with the embodiment or example is included in at least one embodiment or example of the present disclosure. In this description, schematic representations of the above terms are not necessarily directed to the same embodiment or example. Further, the particular features, structures, materials, or characteristics described may be combined in any one or more embodiments or examples in a suitable manner. Moreover, various embodiments or examples described in this specification, as well as features of various embodiments or examples, may be integrated and combined by those skilled in the art without departing from the scope of the present disclosure.

Although embodiments of the present disclosure have been shown and described above, it should be understood that the above embodiments are exemplary and not to be construed as limiting the present disclosure, and that changes, modifications, substitutions, and alterations may be made to the above embodiments by those skilled in the art within the scope of the present disclosure.

## Claims

1. A dual-medium turbulent fluidized bed (TFB) gasification incinerator, comprising: an incinerator body, a gas-solid separator, a waste heat recovery device, and an incinerator body support, the incinerator body, the gas-solid separator, and the waste heat recovery device being all sequentially interconnected,
wherein the incinerator body comprises a gasification section, a combustion section, and a heat exchange section that are all sequentially connected from bottom to top, the bottom of the gasification section being provided with a first air distribution device and having a slag discharge outlet, the gasification section comprising an upper variable cross-section segment, an equal cross-section segment, and a lower variable cross-section segment arranged from upper, middle to lower level, the upper variable cross-section segment having a cross-sectional area gradually increasing from top to bottom, and the lower variable cross-section segment having a cross-sectional area gradually decreasing from top to bottom, wherein the cross-sectional area of the upper variable cross-section segment is not less a cross-sectional area of the combustion section, the combustion section being provided with secondary air distribution devices on sides of the combustion section;
wherein a furnace wall of the gasification section and a furnace wall of the combustion section are both water walls, a furnace wall of the heat exchange section connecting indirectly with the furnace wall of the combustion section, an outer surface of the furnace wall of the combustion section being provided with a connection part, the heat exchange section comprising at least one stage of heat exchange furnace wall, two adjacent stages of heat exchange furnace walls being arranged vertically and connecting with each other indirectly, an inner surface of each stage of the heat exchange furnace wall being provided with a set of heat conduction oil coil pipes, a flow direction of a heat conduction oil in each set of heat conduction oil coil pipes being bottom-in and top-out, the heat exchange section having a hot flue gas outlet at the top of the heat exchange section, and the hot flue gas outlet being connects with the waste heat recovery device via the gas-solid separator;
wherein the waste heat recovery device comprises a heat conduction oil pipe row, an economizer, and an air preheater that are all arranged sequentially from top to bottom, a hot air outlet of the air preheater being connected to at least one of an air inlet of a gasification section and an air inlet of a combustion section; and
wherein the incinerator body support comprises a steel frame body and at least one layer of support plate, the steel frame body and the at least one layer of support plate being interconnected with each other, the at least one layer of the support plate being higher than the connection part and facing the incinerator body, each of the at least one layer of the support plate supporting one stage of the heat exchange furnace wall and the heat conduction oil coil pipes arranged at the inner surface of the heat exchange furnace wall of the one stage, a flexible connection seal being provided between the two adjacent stages of heat exchange furnace walls and between the heat exchange furnace wall and the furnace wall of the combustion section, and an incinerator body portion of the gasification section and an incinerator body portion of the combustion section being connected to the steel frame body via the connection part by suspension arrangement.

2. The dual-medium TFB gasification incinerator according to claim 1, wherein the incinerator body portion of the gasification section and the incinerator body portion of the combustion section are suspended from a layer of support plate between the heat exchange furnace wall and the combustion section furnace wall via the connection part; or
the incinerator body support further comprises a first transverse beam provided at a part of the steel frame body above the connection part and facing towards the incinerator body, the incinerator body portion of the gasification section and the incinerator body portion of the combustion section being suspended from the first transverse beam via the connection part.

3. The dual-medium TFB gasification incinerator according to claim 2, wherein the layer of the support plate between the heat exchange furnace wall and the combustion section furnace wall is disposed on a side of the first transverse beam close to the incinerator body; and/or
the incinerator body support further comprises at least one layer of a second transverse beam provided at a part of the steel frame body above the first transverse beam and facing towards the incinerator body, a number of layers of the second transverse beams being equal to a number of layers of the support plates disposed between the heat exchange furnace walls, and each of the layers of the support plates located between the two adjacent stages of heat exchange furnace walls being disposed at one of the at least one layer of the second transverse beam on a side close to the incinerator body.

4. The dual-medium TFB gasification incinerator according to claim 2 or 3, wherein a steam drum is connected to an upper portion of the water walls, the steam drum having an inlet connected to an upper header of the water walls and an outlet connected to a lower header of the water walls.

5. The dual-medium TFB gasification incinerator according to claim 4, wherein a steam drum support is provided at the layer of the support plate between the heat exchange furnace wall and the combustion section furnace wall or the first transverse beam is provided with a steam drum support, the steam drum being disposed at the steam drum support.

6. The dual-medium TFB gasification incinerator according to any one of claims 1 to 5, wherein a length of the combustion section is 1/4 to 1/3 of a total height of the incinerator body, a length of the gasification section being 1/6 to 1/3 of the total height of the incinerator body.

7. The dual-medium TFB gasification incinerator according to any one of claims 1 to 6, wherein a connection height between the two adjacent stages of heat exchange furnace walls is in a range of 300 mm to 500 mm, a connection height between the heat exchange furnace wall and the furnace wall of the combustion section is in a range of 300 mm to 500 mm.

8. The dual-medium TFB gasification incinerator according to any one of claims 1 to 7, wherein an inner surface of the furnace wall of the gasification section is provided with a refractory layer.

9. The dual-medium TFB gasification incinerator according to any one of claims 1 to 8, wherein an inner surface of the furnace wall of the combustion section is partially or entirely provided with a refractory layer.

10. The dual-medium TFB gasification incinerator according to any one of claims 1 to 9, wherein each of the secondary air distribution devices has an upper layer of air inlet, a middle layer of air inlet, and a lower layer of air inlet that are arranged in a height direction of the incinerator body.

11. The dual-medium TFB gasification incinerator according to any one of claims 1 to 10, wherein each set of the heat conduction oil coil pipes are arranged helically and upwards in a circumferential direction of the heat exchange furnace wall.

12. The dual-medium TFB gasification incinerator according to any one of claims 1 to 11, wherein a flexible connection seal is provided between the incinerator body and the hot flue gas outlet.

13. The dual-medium TFB gasification incinerator according to any one of claims 1 to 12, wherein the air preheater is internally provided with a partition to divide the air preheater into a first air preheater and a second air preheater, which are arranged vertically or horizontally, the first air preheater having a first cold air inlet and a first hot air outlet, the second air preheater having a second cold air inlet and a second hot air outlet, one of the first hot air outlet and the second hot air outlet being connected to the air inlet of the combustion section, and another one of the first hot air outlet and the second hot air outlet being connected to the air inlet of the gasification section.

14. The dual-medium TFB gasification incinerator according to any one of claims 1 to 13, wherein the waste heat recovery device has a flue gas exhaust port at a lower part of the waste heat recovery device and a first ash discharge outlet at a bottom part of the waste heat recovery device, the flue gas exhaust port being located below the air preheater and connected to a flue gas purification device.

15. The dual-medium TFB gasification incinerator according to any one of claims 1 to 14, wherein the heat conduction oil pipe row comprises a plurality of layers of heat conduction oil pipes arranged in a staggered, parallel manner in a height direction of the waste heat recovery device.

16. The dual-medium TFB gasification incinerator according to any one of claims 1 to 15, wherein the dual-medium TFB gasification incinerator further comprises an air distribution and deslagging system comprising the first air distribution device and a deslagging device;
the first air distribution device comprising:
a primary air distributor provided at a bottom of the incinerator body;
a primary air chamber provided at a bottom of the primary air distributor; and
a secondary air distributor provided outside the primary air chamber, the secondary air distributor and the primary air distributor being arranged in a stepped manner, and an arrangement height of the secondary air distributor is lower than an arrangement height of the primary air distributor; and
the deslagging device comprising:
a deslagging air chamber provided at a bottom of the secondary air distributor, a pressure of the deslagging air chamber being greater than a pressure of the primary air chamber;
a deslagging channel connecting with the incinerator body and provided below the incinerator body, the deslagging channel being disposed next to an end of the secondary air distributor away from the primary air distributor, and the deslagging channel having the slag discharge outlet; and
deslagging valves comprising a first deslagging valve and a second deslagging valve oppositely provided on an inner wall of the deslagging channel, the second deslagging valve being disposed below the first deslagging valve, and a width of the first deslagging valve being smaller than a width of the deslagging channel.

17. The dual-medium TFB gasification incinerator according to claim 16, wherein the air distribution and deslagging system further comprises a fluidizing gas flow channel located in an upper part of the deslagging air chamber and connecting with the deslagging channel and the incinerator body, the fluidizing gas flow channel connecting with the incinerator body through a fluidizing gas circulation inlet and a bulk waste outlet that are arranged vertically, the fluidizing gas circulation inlet being formed in a region of a lower part of the incinerator body below or at a flush level with a top of the fluidizing gas flow channel, and the bulk waste outlet being formed in a region of the lower part of the incinerator body above or at a flush level with the primary air distributor; and
b=(1~1.5)a, c=(0.5~0.8)a, d=(1.5~2.0)b, and w₀=(2.0~3.0)b, where a is an aperture of the bulk waste outlet, c is an aperture of an inlet of the fluidizing gas circulation, d is a width of the fluidizing gas flow channel, b is an aperture of the inlet of the deslagging channel, and w₀ is the width of the deslagging channel.

18. The dual-medium TFB gasification incinerator according to claim 16 or 17, wherein 0.5w₀≤w₁≤0.75w₀, and 0.75w₀≤w₂<w₀, where w₀ is the width of the deslagging channel, w₁ is the width of the first deslagging valve, and w₂ is a width of the second deslagging valve.

19. The dual-medium TFB gasification incinerator according to any one of claims 16 to 18, wherein the pressure of the primary air chamber is in a range of 10 kPa to 15 kPa.

20. The dual-medium TFB gasification incinerator according to any one of claims 16 to **19, wherein** the pressure of the deslagging air chamber is in a range of 12 kPa to 20 kPa.

21. The dual-medium TFB gasification incinerator according to any one of claims 16 to 20, wherein the deslagging valve further comprises a first rack, a first speed reducer, and a first motor that are provided outside the deslagging channel and are all sequentially interconnected the first rack being connected to the first deslagging valve.

22. The dual-medium TFB gasification incinerator according to any one of claims 16 to 21, wherein the deslagging valve further comprises a second rack, a second speed reducer, and a second motor that are provided outside the deslagging channel and are all sequentially interconnected, the second rack being connected to the second deslagging valve.

23. The dual-medium TFB gasification incinerator according to any one of claims 16 to 22, wherein an angle between the primary air distributor and a horizontal plane is in a range of 5° to 20°, an angle between the secondary air distributor and the horizontal plane being in a range of 3° to 10°.

24. The dual-medium TFB gasification incinerator according to any one of claims 16 to 23, wherein a thickness of a valve plate of the first deslagging valve and a thickness of a valve plate of the second deslagging valve are each independently in a range of 20 mm to 35 mm.

25. The dual-medium TFB gasification incinerator according to any one of claims 16 to 24, wherein when the deslagging valve is closed, an angle α between a horizontal plane and a connection line connecting an end of the first deslagging valve away from the inner wall of the deslagging channel with an end of the second deslagging valve away from the inner wall of the deslagging channel is in a range of 5° to 15°.

26. The dual-medium TFB gasification incinerator according to any one of claims 16 to 25, wherein a distance 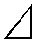 H between the first deslagging valve and the second deslagging valve is in a range of 1/4w₀ to 1/3w₀.

27. The dual-medium TFB gasification incinerator according to any one of claims 1 to 26, further comprising an ash discharging device, wherein the gas-solid separator has a second ash discharge outlet at a bottom of the gas-solid separator, the ash discharging device being connected to the second ash discharge outlet, and the ash discharging device comprising:
an ash hopper in a cylindrical shape;
a spiral scraper provided inside the ash hopper;
a gear having an end connected to the spiral scraper and sealed with the ash hopper;
a coupler connected to another end of the gear; and
a motor connected to the coupler.

28. The dual-medium TFB gasification incinerator according to claim 27, wherein the spiral scraper comprises a plurality of spiral sub-scrapers connected by rivets disposed between adjacent sub-spiral scrapers.

29. The dual-medium TFB gasification incinerator according to claim 27 or 28, wherein a screw pitch 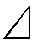 L of the spiral scraper satisfies 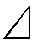 L=(1/2~3/2)D, where D is an average value of an outer diameter of the ash hopper in a range of the screw pitch.

30. The dual-medium TFB gasification incinerator according to any one of claims 27 to 29, wherein a rotation angle of the spiral scraper in a circumferential direction of the ash hopper is in a range of 60° to 90°.

31. The dual-medium TFB gasification incinerator according to any one of claims 27 to 30, wherein a width of the spiral scraper is in a range of 1/4 to 1/3 of a circumference of an inner wall of the ash hopper where the spiral scraper is located in the circumference direction of the ash hopper.

32. The dual-medium TFB gasification incinerator according to any one of claims 27 to 31, wherein the ash hopper comprises a conical ash hopper and a cylindrical ash hopper that are integrally formed, the conical ash hopper being disposed above the cylindrical ash hopper.

33. The dual-medium TFB gasification incinerator according to any one of claims 27 to 32, wherein the ash discharging device further comprises:
a temperature measurer provided at a wall of the ash hopper and penetrating into the ash hopper, the temperature measurer being configured to monitor temperature fluctuations of flowing ash in the ash hopper.

34. The dual-medium TFB gasification incinerator according to claim 33, wherein the ash discharging device further comprises:
a PLC control unit respectively connected to the temperature measurer and the motor via an electrical signal.

35. The dual-medium TFB gasification incinerator according to any one of claims 27 to 34, wherein the ash discharging device further comprises:
a plurality of limit protrusions provided at an inner wall of the ash hopper.

36. The dual-medium TFB gasification incinerator according to any one of claims 1 to 35, wherein the heat conduction oil pipe row comprises at least one layer of heat conduction oil heat exchange pipes, the at least one layer of heat conduction oil heat-exchange pipes each comprising a plurality of heat conduction oil heat-exchange pipes arranged at intervals, and at least one heat conduction oil heat-exchange pipe of the plurality of heat conduction oil heat-exchange pipes being provided with an anti-wear plate at a windward surface of the at least one heat conduction oil heat-exchange pipe; and/or the economizer comprises at least one layer of heat-conducting water heat-exchange pipes, the at least one layer of heat-conducting water heat-exchange pipes each comprising a plurality of heat-conducting water heat-exchange pipes arranged at intervals, and at least one heat-conducting water heat-exchange pipe of the plurality of heat-conducting water heat-exchange pipes being provided with an anti-wear plate at a windward surface of the at least one heat-conducting water heat-exchange pipe; and
the anti-wear plate is detachably disposed in a length direction of the at least one heat-exchange pipe, a cross section of the anti-wear plate being of a triangle shape or a triangle-like shape with a hyperbolic structure, and a vertex of the triangle shape or an intersection of the hyperbolic structure being located on a side of the anti-wear plate away from the at least one heat-exchange pipe.

37. The dual-medium TFB gasification incinerator according to claim 36, wherein the anti-wear plate is suspended from the at least one heat-exchange pipe.

38. The dual-medium TFB gasification incinerator according to claim 36 or 37, wherein the triangle shape and the triangle-like shape are both axisymmetric patterns, a symmetric axis of the triangle shape or the triangle-like shape coinciding with a perpendicular line from the vertex of the triangle shape or the intersection of the hyperbolic structure to a central axis of the at least one heat-exchange pipe.

39. The dual-medium TFB gasification incinerator according to any one of claims 36 to 38, wherein a width of the anti-wear plate on a side close to the at least one heat-exchange pipe is in a range of 0.2 times to 0.5 times an outer diameter of the at least one heat-exchange pipe.

40. The dual-medium TFB gasification incinerator according to any one of claims 36 to 39, wherein a height of the anti-wear plate is in a range of 0.05 times to 0.1 times an outer diameter of the at least one heat-exchange pipe.

41. The dual-medium TFB gasification incinerator according to any one of claims 36 to 40, wherein a distance between a side of the anti-wear plate close to the at least one heat-exchange pipe and the at least one heat-exchange pipe is in a range of 0.3 times to 0.6 times an outer diameter of the at least one heat-exchange pipe.

42. The dual-medium TFB gasification incinerator according to any one of claims 36 to 41 wherein a distance between the anti-wear plate and the at least one heat exchange pipe is adjustable.

43. The dual-medium TFB gasification incinerator according to any one of claims 36 to 42, wherein the at least one heat-exchange pipe is provided with a support on the top of the at least one heat-exchange pipe, the support having at least one first connecting hole, the anti-wear plate being provided with a connection rod at a bottom of the anti-wear plate, the connection rod having at least one second connection hole matching and connected to the first connection hole, and the at least one heat-exchange pipe and the anti-wear plate being fixed by the support and the connection rod.

44. The dual-medium TFB gasification incinerator according to any one of claims 36 to 43, wherein the heat conduction oil pipe row comprises a plurality of rows of heat conduction oil heat-exchange pipes arranged in parallel in line, and wherein in a row of heat conduction oil heat-exchange pipes on a side of the heat conduction oil pipe row closest to a flue gas inlet of the waste heat recovery device, each of the heat conduction oil heat-exchange pipes is provided with an anti-wear plate at a windward surface of the heat conduction oil heat-exchange pipe.

45. The dual-medium TFB gasification incinerator according to any one of claims 36 to 44, wherein the heat conduction oil pipe row comprises a plurality of rows of heat conduction oil heat-exchange pipes arranged in a staggered, parallel manner, and wherein in at least two rows of heat conduction oil heat-exchange pipes arranged in a staggered manner on a side of the heat conduction oil pipe row closest to a flue gas inlet of the waste heat recovery device, each of the heat conduction oil heat-exchange pipes is provided with an anti-wear plate at a windward surface of the heat conduction oil heat-exchange pipe.

46. The dual-medium TFB gasification incinerator according to any one of claims 36 to 45, wherein the economizer comprises a plurality of rows of heat-conducting water heat-exchange pipes arranged in parallel in line, and wherein in a row of heat-conducting water heat-exchange pipes on a side of the economizer closest to a flue gas inlet of the waste heat recovery device, each of the heat-conducting water heat-exchange pipes is provided with an anti-wear plate at a windward surface of the heat-conducting water heat-exchange pipe.

47. The dual-medium TFB gasification incinerator according to any one of claims 36 to 46, wherein the economizer comprises a plurality of rows of heat-conducting water heat-exchange pipes arranged in a staggered, parallel manner, and wherein in at least two rows of heat-conducting water heat-exchange pipes arranged in a staggered manner on a side of the economizer closest to a flue gas inlet of the waste heat recovery device, each of the heat-conducting water heat-exchange pipes is provided with an anti-wear plate at a windward surface of the heat-conducting water heat-exchange pipe.

48. An implementation method of waste gasification incineration, implemented by the dual-medium TFB gasification incinerator according to any one of claims 1 to 47, comprising:
supplying waste materials to the gasification section of a lower part of the incinerator body for gasification to obtain gasified gas and solid residues, which are discharged out of the incinerator intermittently;
importing the gasified gas into the combustion section in the middle of the incinerator body for combustion to obtain a combusted high-temperature flue gas;
cooling the combusted high-temperature flue gas by heat exchange with the heat conduction oil coil pipes to obtain a medium-temperature flue gas;
performing gas-solid separation on the medium-temperature flue gas by the gas-solid separator to obtain a primary purified flue gas; and
introducing the primary purified flue gas into the waste heat recovery device, and discharging purified flue gas after heat exchange sequentially through the heat conduction oil pipe row, the economizer, and the air preheater.

49. The implementation method according to claim 48, wherein a temperature of the gasification section is in a range of 650°C to 850°C and a temperature of the combustion section is in a range of 850°C to 1100°C.

50. The implementation method according to claim 48 or 49, wherein a flue gas obtained after being heat exchanged by the heat conduction oil coil pipes has a temperature in a range of 500°C to 600°C, a flue gas obtained after being heat exchanged by the heat conduction oil pipe row having a temperature in a range of 370°C to 430°C, and a flue gas obtained after being heat exchanged by the air preheater having a temperature in a range of 170°C to 190°C.

51. The implementation method according to any one of claims 48 to 50, wherein a gasifying agent supplied to the gasification section has a temperature in a range of 150°C to 200°C and a pressure in a range of 10 kPa to 15 kPa; and
a combustion air supplied to the combustion section has a temperature in a range of 100°C to 200°C and a pressure in a range of 4 kPa to 6 kPa.
